# EUROPÄISCHE PATENTSCHRIFT

(11) **EP 3 181 254 B1**
(45) Veröffentlichungstag und Bekanntmachung des Hinweises auf die Patenterteilung: **15.08.2018**
(21) Anmeldenummer: 16204593.4
(22) Anmeldetag: 16.12.2016
(51) Int. Cl.: B21D 5/02, B21D 37/14

(54) **FERTIGUNGSANLAGE MIT EINER WERKZEUG-MANIPULATIONSEINHEIT**
MANUFACTURING PLANT WITH A TOOL MANIPULATION UNIT
INSTALLATION DE FABRICATION COMPRENANT UNE UNITÉ DE MANIPULATION D'OUTIL

(30) Priorität: 18.12.2015 AT 510812015
(43) Veröffentlichungstag der Anmeldung: 21.06.2017
(73) Patentinhaber: TRUMPF Maschinen Austria GmbH & Co. KG., 4061 Pasching (AT)
(72) Erfinder: CAVICCHIA, Luigi, 10028 Trofarello (TO) (IT); TOMASIN, Fabio, 10098 Rivoli (TO) (IT); TONDA ROCH, Andrea, 10141 Torino (IT); VERONESE, Roberto, 10023 Chieri (TO) (IT); VIDOTTO, Giovanni, 10023 Chieri (TO) (IT)
(74) Vertreter: Burger, Hannes

(56) Entgegenhaltungen:
- EP-A1- 0 530 375
- WO-A1-2012/151601
- AT-A4- 510 409
- CH-A5- 668 375

## Beschreibung

Die Erfindung betrifft eine Fertigungsanlage, insbesondere für das Freiformbiegen von aus Blech zu fertigenden Werkstücken.

Die WO 2012/151601 beschreibt eine gattungsgemäße Fertigungsanlage, insbesondere für das Freiformbiegen von aus Blech zu fertigenden Werkstücken, umfassend eine Biegepresse mit einem Maschinengestell und Pressbalken sowie an den Pressbalken angeordnete Werkzeugaufhahmen für ein Biegewerkzeug. Weiters umfasst die Fertigungsanlage einen Werkzeugspeicher, eine Hinteranschlageinheit mit einem Anschlagelement sowie eine Manipulationsvorrichtung zum Verbringen des Biegewerkzeugs zwischen dem Werkzeugspeicher und den Werkzeugaufnahmen. Das Anschlagelement und die Manipulationsvorrichtung sind an einem gemeinsamen Träger gegenüberliegend sowie in zueinander entgegengesetzter Ausrichtung angeordnet und um eine Schwenkachse drehbar gelagert. Der Träger ist von einer ersten Stellung, bei der das Anschlagelement dem in den Werkzeugaufnahmen gehaltenen Biegewerkzeug zugewendet ist, in eine zweite Stellung verschwenkbar, bei der die Manipulationsvorrichtung dem in den Werkzeugaufhahmen gehaltenen Biegewerkzeug zugewendet und im rechten Winkel bezüglich der Längserstreckung der Werkzeugaufnahmen ausgerichtet ist. Diese Hinteranschlageinheit mit dem Anschlagelement sowie der Manipulationsvorrichtung konnte schon für eine Vielfalt an Positionier- und Werkzeugwechselvorgängen eingesetzt werden, jedoch war diese nicht in allen Anwendungsfällen einsetzbar.

Aufgabe der vorliegenden Erfindung war es, die Nachteile des Standes der Technik zu überwinden und eine Fertigungsanlage zur Verfügung zu stellen, mittels derer ein Benutzer in der Lage ist, eine vom Anschlagelement unabhängige Manipulation an dem in den Werkzeugaufnahmen gehaltenen Biegewerkzeug einfach durchführen zu können und darüber hinaus noch eine Manipulation des Biegewerkzeugs in seitlichen Randbereichen der Fertigungsanlage, insbesondere im Bereich der beiden Seitenwangen des Maschinengestells und seitlich darüber hinaus, vornehmen zu können.

Diese Aufgabe der Erfindung wird durch eine Fertigungsanlage gemäß den Ansprüchen gelöst.

Die erfindungsgemäße Fertigungsanlage dient insbesondere für das Freiformbiegen von aus Blech zu fertigenden Werkstücken und weist folgende Anlagenteile auf:
- eine Biegepresse, insbesondere eine Abkantpresse, mit einem Maschinengestell und Pressbalken sowie an den Pressbalken angeordneten bzw. ausgebildeten Werkzeugaufhahmen,
- zumindest ein Biegewerkzeug mit mindestens einem Biegestempel und mindestens einem Biegegesenk,
- zumindest einen Werkzeugspeicher für zumindest ein Biegewerkzeug,
- zumindest eine Hinteranschlageinheit mit einem Grundgestell und zumindest einem Anschlagelement zum Positionieren des zu bearbeitenden Bleches auf der von einer Bedienseite abgewendeten Seite der Pressbalken,
- eine Werkzeug-Manipulationseinheit zum Verbringen des Biegewerkzeugs zwischen dem zumindest einen Werkzeugspeicher und den Werkzeugaufhahmen oder zur Positionsveränderung des Biegewerkzeugs relativ bezüglich der Werkzeugaufnahmen, wobei die Werkzeug-Manipulationseinheit an der Hinteranschlageinheit angeordnet ist,
wobei die Werkzeug-Manipulationseinheit folgende Bauteile oder Bauteilgruppen umfasst:
- einen Manipulatorarm mit einem ersten Endbereich und einem zweiten Endbereich, welcher Manipulatorarm in seinem ersten Endbereich am Grundgestell der Hinteranschlageinheit um eine, eine vertikale Ausrichtung aufweisende, erste Schwenkachse eigenständig und unabhängig von dem zumindest einen Anschlagelement verschwenkbar gelagert ist,
- eine Verstelleinheit, welche Verstelleinheit mit dem Manipulatorarm für die Durchführung der Schwenkbewegung in Antriebsverbindung steht,
- eine Werkzeug-Manipulationsvorrichtung, und die Werkzeug-Manipulationsvorrichtung im zweiten Endbereich des Manipulatorarms angeordnet ist.

Der dadurch erzielte Vorteil liegt darin, dass so durch die eigenständige und unabhängige Ausbildung eines Manipulatorarms an jeder der Hinteranschlageinheiten ein noch besserer und umfangreicherer Arbeitsbereich abgedeckt werden kann. Damit kann unabhängig vom Hinteranschlag, insbesondere dessen Anschlagelement, eine Manipulation von Komponenten des Biegewerkzeugs sowohl an deren an den Pressbalken gehaltenen Position als auch ein Wechsel zwischen den Pressbalken und dem Werkzeugspeicher durchgeführt werden.

Dadurch dass der Manipulatorarm bevorzugt in einer Horizontalebene an der Hinteranschlageinheit gelagert ist, kann ein größerer Winkelbereich auch seitlich des Maschinengestells bedient werden. Je nach Wahl und Ausbildung der Werkzeug-Manipulationseinheit kann so auch bei einer schrägen oder winkeligen Ausrichtung des Manipulatorarms bezüglich der Längserstreckung der Pressbalken eine Manipulation an dem Biegewerkzeug durchgeführt werden. Damit kann das Biegewerkzeug von einer äußeren randlichen Anordnung am Pressbalken in den Arbeitsbereich, insbesondere in den Mittelbereich der Pressbalken, verschoben werden oder aber auch von der äußeren randlichen Anordnung am Pressbalken in einen hinterhalb des Maschinengestells zwischen den Seitenwangen angeordneten Werkzeugspeicher verbracht werden.

Weiters kann es vorteilhaft sein, wenn der Manipulatorarm relativ bezüglich des Grundgestells in Richtung der ersten Schwenkachse verstellbar ist. Damit kann eine höhenmäßige Anpassung des Manipulatorarms mit der daran angeordneten Werkzeug-Manipulationsvorrichtung in Bezug auf die durchzuführenden Manipulationsvorgänge einfach erfolgen. Durch diese zumeist in vertikaler Richtung erfolgende Verstellbewegung des Manipulatorarms relativ bezüglich des Grundgestells können so auch Biegewerkzeuge an zueinander in Höhenrichtung unterschiedlichen Positionen einfach manipuliert werden.

Eine andere Ausführungsform zeichnet sich dadurch aus, dass die Werkzeug-Manipulationsvorrichtung am Manipulatorarm um eine zweite Schwenkachse relativ bezüglich des Manipulatorarms verschwenkbar gelagert ist und die zweite Schwenkachse eine parallele Ausrichtung bezüglich der ersten Schwenkachse aufweist. Damit wird eine zusätzliche Schwenkmöglichkeit der Werkzeug-Manipulationsvorrichtung an einem Endbereich des Manipulatorarms ermöglicht. Damit kann eine noch individuellere Manipulation des Biegewerkzeugs, insbesondere im Bereich der Pressbalken, ermöglicht werden. So kann bei einer in etwa parallelen Ausrichtung des Manipulatorarms bezüglich der Werkzeugaufnahmen auch noch ein seitlicher äußerer Randbereich der Werkzeugaufnahmen im Bereich der Seitenwangen des Maschinengestells sowie darüber hinaus bedient werden.

Eine weitere mögliche Ausführungsform hat die Merkmale, dass die Verstelleinheit eine erste Antriebsvorrichtung mit einem ersten Antriebsorgan aufweist, welches erste Antriebsorgan mit dem Manipulatorarm in Antriebsverbindung steht und eine erste Antriebsachse der ersten Antriebsvorrichtung für den Manipulatorarm koaxial bezüglich der ersten Schwenkachse des Manipulatorarms ausgerichtet ist. Damit kann eine unabhängige Verschwenkbewegung des Manipulatorarms um die erste, im Bereich des Grundgestells der Hinteranschlageinheit angeordnete Schwenkachse erfolgen.

Eine weitere Ausbildung sieht vor, dass die erste Antriebsvorrichtung der Verstelleinheit ein insbesondere rohrförmig ausgebildetes Lager- und Antriebselement umfasst, welches Lager- und Antriebselement mit dem Manipulatorarm in Antriebsverbindung steht und am Grundgestell der Hinteranschlageinheit drehbar gelagert ist und die erste Schwenkachse definiert. Durch das Vorsehen des insbesondere rohrförmig ausgebildeten Lager- und Antriebselements kann so am Manipulatorarm nicht nur eine einfache drehbare Lagerung desselben geschaffen sondern auch das Antriebsmoment für die Schwenkbewegung einfach übertragen werden.

Eine andere Ausführungsform zeichnet sich dadurch aus, dass die Verstelleinheit eine zweite Antriebsvorrichtung aufweist, welche mit der Werkzeug-Manipulationsvorrichtung in Antriebsverbindung steht. Durch das Vorsehen einer zweiten Antriebsvorrichtung im Bereich der Verstelleinheit kann so eine Verschwenkbewegung der Werkzeug-Manipulationsvorrichtung unabhängig von der Schwenkbewegung des Manipulatorarms erreicht werden.

Eine weitere bevorzugte Ausführungsform ist dadurch gekennzeichnet, dass die zweite Antriebsvorrichtung eine Antriebswelle und eine damit in Antriebsverbindung stehende Abtriebswelle aufweist, und dass die Abtriebswelle im zweiten Endbereich des Manipulatorarms koaxial bezüglich der zweiten Schwenkachse angeordnet ist. Durch das Anordnen der Abtriebswelle im Bereich der zweiten Schwenkachse des Manipulatorarms kann so eine direkte Übertragung der Schwenkbewegung auf die Werkzeug-Manipulationsvorrichtung ermöglicht werden.

Es ist auch eine Ausführungsform vorteilhaft, bei welcher die Antriebswelle im ersten Endbereich des Manipulatorarms angeordnet ist sowie in koaxialer Ausrichtung bezüglich der ersten Schwenkachse des Manipulatorarms ausgerichtet ist. Durch das Anordnen der zweiten Antriebsvorrichtung mit ihrer Antriebswelle im Bereich der ersten Schwenkachse des Manipulatorarms kann so eine kompakte Baueinheit der gesamten Verstelleinheit geschaffen werden.

Weiters kann es vorteilhaft sein, wenn die Antriebswelle über ein bevorzugt endlos ausgebildetes Antriebsmittel mit der Abtriebswelle in Antriebsverbindung steht. Damit kann eine einfache direkte Übertragung des Antriebsmoments von der Antriebswelle auf die Abtriebswelle und in weiterer Folge an die Werkzeug-Manipulationsvorrichtung erfolgen. Besonders vorteilhaft ist es, wenn ein überwiegender Anteil der Antriebswelle, der Abtriebswelle sowie des zwischen diesen angeordneten Antriebsmittels innerhalb des Manipulatorarms angeordnet ist.

Eine andere alternative Ausführungsform zeichnet sich dadurch aus, dass die Antriebswelle zumindest abschnittsweise innerhalb des Lager- und Antriebselements angeordnet ist sowie drehbar im Lager- und Antriebselement gelagert ist. So kann eine kompakte Baueinheit geschaffen werden.

Eine weitere mögliche und gegebenenfalls alternative Ausführungsform hat die Merkmale, dass die zweite Antriebsvorrichtung der Verstelleinheit ein zweites Antriebsorgan aufweist und das zweite Antriebsorgan mit der Antriebswelle in Antriebsverbindung steht. Durch das Vorsehen eines zweiten Antriebsorgans kann so eine von der Antriebsbewegung des Manipulatorarms unabhängige Verstellbewegung der Werkzeug-Manipulationsvorrichtung erreicht werden.

Eine weitere Ausbildung sieht vor, dass an der Antriebswelle der Verstelleinheit eine Kupplungsvorrichtung angeordnet ist und die Antriebswelle mittels der Kupplungsvorrichtung wahlweise entweder mit dem Manipulatorarm, insbesondere mit dem damit in Antriebsverbindung stehenden Lager- und Antriebselement, und der mit dem Manipulatorarm in Antriebsverbindung stehenden ersten Antriebsvorrichtung oder mit dem Grundgestell der Hinteranschlageinheit kuppelbar ist. Durch das Vorsehen einer Kupplungsvorrichtung an der Antriebswelle der Verstelleinheit kann so auf das Vorsehen einer eigenen, dafür ansonsten notwendigen zweiten Antriebsvorrichtung verzichtet werden. Je nach gewählter Kupplungsstellung kann im Zuge der Verstellbewegung des Manipulatorarms auch gleichzeitig eine Verstellbewegung, insbesondere Schwenkbewegung, der Werkzeug-Manipulationsvorrichtung bezüglich des Manipulatorarms erfolgen. Bei gleich groß gewählten Durchmessern der beiden Wellen im Angriffsbereich des endlos ausgebildeten Antriebsmittels kann so eine gleichbleibende Ausrichtung der Werkzeug-Manipulationsvorrichtung bezüglich der Werkzeugaufnahmen beibehalten werden. In der anderen Kupplungsstellung wird dann die relative Ausrichtung der Werkzeug-Manipulationsvorrichtung bezüglich des Manipulatorarms unverändert beibehalten.

Eine andere Ausführungsform zeichnet sich dadurch aus, dass die Antriebswelle in deren Axialerstreckung geteilt ausgebildet ist und ein erster Antriebswellenteil im Manipulatorarm und ein zweiter Antriebswellenteil an der Hinteranschlageinheit angeordnet ist und der Manipulatorarm mittels einer Kopplungsvorrichtung mit der ersten Antriebsvorrichtung, insbesondere deren Antriebselement, drehfest gekoppelt ist, und in der Kopplungsstellung der erste Antriebswellenteil mit dem zweiten Antriebswellenteil in Antriebsverbindung steht. Damit kann eine Abnahme und Entkopplung des Manipulatorarms von der Verstelleinheit ermöglicht werden. So wird weiters die Möglichkeit geschaffen, den Manipulatorarm mit der daran angeordneten Werkzeug-Manipulationsvorrichtung in zueinander unterschiedlichen Positionen an der Verstelleinheit anzuordnen und dort auch drehfest mit dieser verbinden zu können.

Eine andere Ausbildung sieht vor, dass die zweite Antriebsvorrichtung ein zweites Antriebsorgan aufweist, welches zweite Antriebsorgan am Manipulatorarm oder innerhalb des Manipulatorarms angeordnet ist und mit der zweiten Schwenkachse der Werkzeug-Manipulationsvorrichtung in Antriebsverbindung steht. Dadurch kann ein räumliche Trennung der beiden Antriebsvorrichtungen bezüglich des Manipulatorarms erreicht werden. So kann eine direktere Übertragung der durchzuführenden Schwenkbewegung auf die Greifvorrichtung erzielt werden.

Eine weitere bevorzugte Ausführungsform ist dadurch gekennzeichnet, dass die Werkzeug-Manipulationsvorrichtung eine erste Greifvorrichtung aufweist, welche erste Greifvorrichtung an der zweiten Schwenkachse oder an der Abtriebswelle angeordnet ist. Durch das Vorsehen einer ersten Greifvorrichtung mit zusammenwirkenden Greiffingern kann so eine sichere und einfache Halterung der zu manipulierenden Biegewerkzeuge an der Werkzeug-Manipulationseinheit ermöglicht werden.

Weiters kann es vorteilhaft sein, wenn die erste Greifvorrichtung oberhalb des Manipulatorarms angeordnet ist. Dadurch kann bereits ein höhenmäßiger Versatz der Greifvorrichtung bezüglich des Manipulatorarms und der Verstelleinheit geschaffen werden.

Eine andere Ausführungsform zeichnet sich dadurch aus, dass die Werkzeug-Manipulationsvorrichtung eine zweite Greifvorrichtung aufweist, welche zweite Greifvorrichtung ebenfalls an der zweiten Schwenkachse oder an der Abtriebswelle angeordnet ist, jedoch bezüglich der ersten Greifvorrichtung eine dazu entgegengesetzte Ausrichtung aufweist. Dadurch kann eine noch höhere Manipulationsvielfalt im Bereich der Werkzeug-Manipulationsvorrichtung geschaffen werden. Darüber hinaus kann so aber auch ein gegenseitiges Behindern der Greifvorrichtungen oder mögliche Kollisionen mit Teilen des Maschinengestells verhindert werden.

Eine weitere mögliche Ausführungsform hat die Merkmale, dass die zweite Greifvorrichtung unterhalb des Manipulatorarms angeordnet ist. Dadurch können je nach Ausrichtung der Greifvorrichtung bezüglich der Stellung des Manipulatorarms auf einfache Art und Weise unterschiedliche Höhenpositionen für die Manipulation des Biegewerkzeuges erzielt werden.

Eine weitere Ausbildung sieht vor, dass die Werkzeug-Manipulationsvorrichtung feststehend mit dem Manipulatorarm verbunden ist und zumindest zwei, einen rechten Winkel einschließende Manipulatorfinger aufweist, und dass die Manipulatorfinger bezüglich der ersten Schwenkachse jeweils eine senkrechte Längsausrichtung aufweisen. Dadurch kann auf eine zusätzliche Verstellvorrichtung für die Werkzeug-Manipulationsvorrichtung im Bereich der Verstelleinheit verzichtet werden, wodurch der Gesamtaufbau der Werkzeug-Manipulationseinheit vereinfacht werden kann. Durch die Schwenkmöglichkeit des Manipulatorarms relativ bezüglich des Grundgestells der Hinteranschlageinheit kann trotzdem ein großer Arbeitsbereich auch über den Verfahrbereich der Hinteranschlageinheit hinaus erzielt werden.

Schließlich zeichnet sich eine andere Ausführungsform dadurch aus, dass einer der Manipulatorfinger im rechten Winkel bezüglich der Längserstreckung des Manipulatorarms ausgerichtet ist und der andere Manipulatorfinger in Richtung der Längserstreckung des Manipulatorarms über den Manipulatorarm vorragt. Durch die winkelige Ausrichtung der Manipulatorfinger zueinander kann so auch bei unterschiedlichen Stellungen des Manipulatorarms relativ bezüglich der Werkzeugaufhahmen trotzdem eine Manipulation der Biegewerkzeuge nicht nur zwischen den Seitenwangen des Maschinengestells sondern auch seitlich außerhalb der Seitenwangen ermöglicht werden.

Zum besseren Verständnis der Erfindung wird diese anhand der nachfolgenden Figuren näher erläutert.

Es zeigen jeweils in stark vereinfachter, schematischer Darstellung:
- Fig. 1: eine Fertigungsanlage in Frontansicht;
- Fig. 2: die Fertigungsanlage nach Fig. 1, in Draufsicht, teilweise geschnitten und stark stilisierter Darstellung;
- Fig. 3: eine erste mögliche Ausbildung einer Werkzeug-Manipulationseinheit, in Ansicht sowie einem Längsschnitt durch deren Manipulatorarm;
- Fig. 4: eine zweite mögliche Ausbildung einer Werkzeug-Manipulationseinheit, in Ansicht sowie einem Längsschnitt durch deren Manipulatorarm;
- Fig. 5: eine andere, weitere mögliche Ausbildung einer Werkzeug-Manipulationseinheit, in Ansicht sowie einem Längsschnitt durch deren Manipulatorarm;
- Fig. 6: die Werkzeug-Manipulationseinheit nach Fig. 5, jedoch in einer entkuppelten Stellung des Manipulatorarms von der Verstelleinheit;
- Fig. 7: die Werkzeug-Manipulationseinheit nach den Fig. 5 und 6, in einer um 180° gedrehten Stellung des Manipulatorarms;
- Fig. 8: die Werkzeug-Manipulationseinheit nach den Fig. 5 bis 7, in einer erneuten Kopplungsstellung des Manipulatorarms;
- Fig. 9: eine weitere mögliche Ausbildung einer Werkzeug-Manipulationseinheit, in Ansicht sowie einem Längsschnitt durch deren Manipulatorarm;
- Fig. 10: eine Fertigungsanlage mit einer anderen Ausbildung einer Werkzeug-Manipulationseinheit an einer Hinteranschlageinheit, in Draufsicht und stark stilisierter Darstellung;
- Fig. 11: die Fertigungsanlage nach Fig. 10, in einer dazu anderen Stellung der Werkzeug-Manipulationseinheit;
- Fig. 12: eine mögliche weitere Ausbildung einer Werkzeug-Manipulationseinheit mit einer im Bereich der zweiten Schwenkachse angeordneten zweiten Antriebsvorrichtung, in Ansicht sowie einem Längsschnitt durch deren Manipulatorarm;
- Fig. 13: eine weitere mögliche Ausbildung einer Werkzeug-Manipulationseinheit mit einer im Bereich der zweiten Schwenkachse angeordneten zweiten Antriebsvorrichtung, in Ansicht sowie einem Längsschnitt durch deren Manipulatorarm.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Der Begriff "insbesondere" wird nachfolgend so verstanden, dass es sich dabei um eine mögliche speziellere Ausbildung oder nähere Spezifizierung eines Gegenstands oder eines Verfahrensschritts handeln kann, aber nicht unbedingt eine zwingende, bevorzugte Ausführungsform desselben oder eine Vorgehensweise darstellen muss.

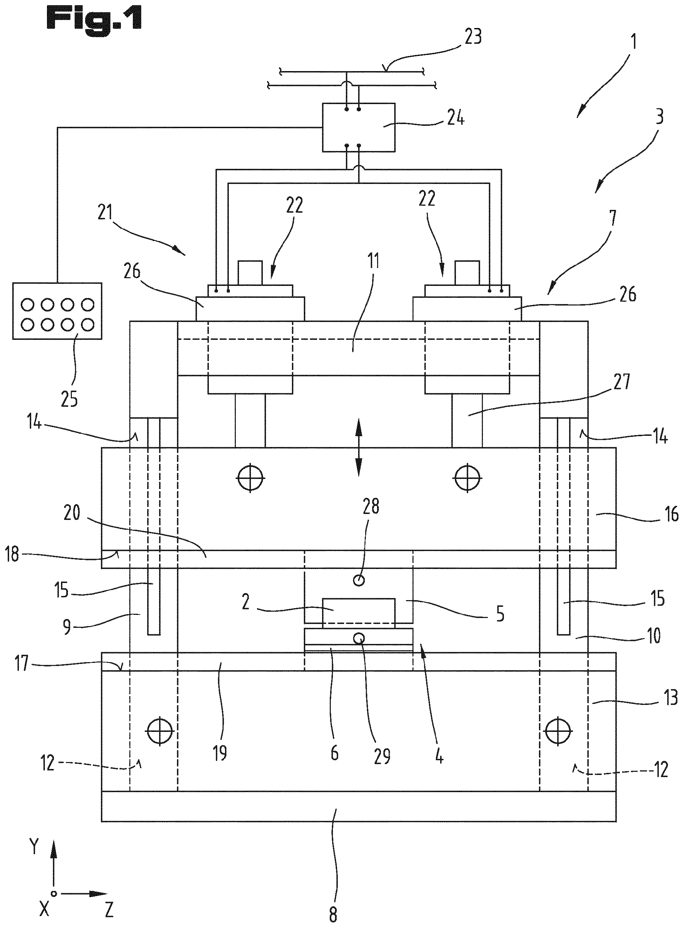

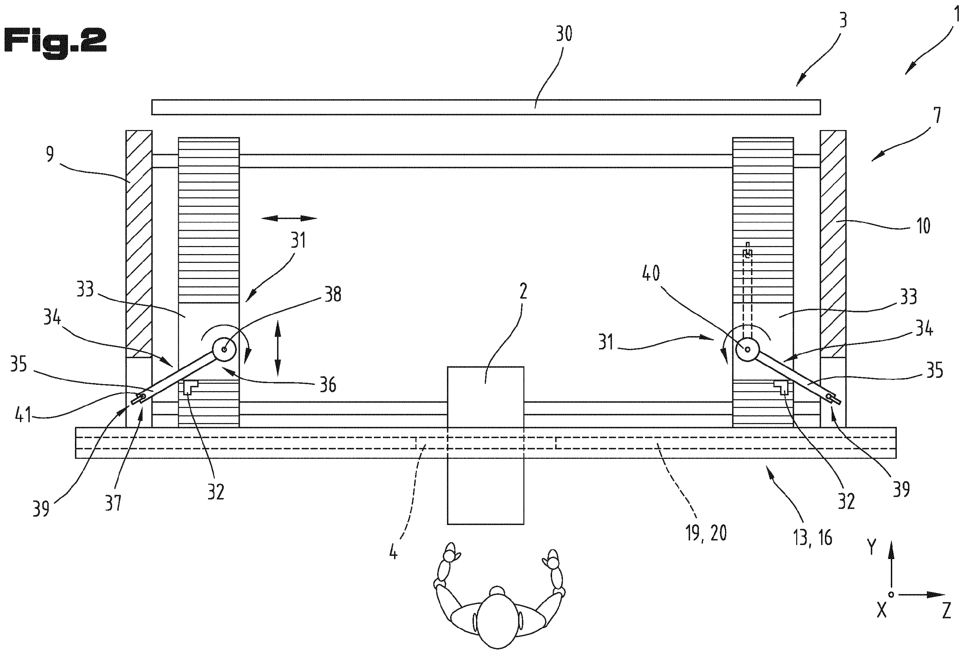

In den Fig. 1 und 2 ist eine Fertigungsanlage 1 in stark schematisch vereinfachter Darstellung gezeigt, welche im vorliegenden Fall insbesondere für das Freiformbiegen von aus Blech zu fertigenden Werkstücken 2 mittels Gesenkbiegen ausgebildet ist.

Die im vorliegenden Fall für das Biegen eingesetzte Fertigungsanlage 1 umfasst eine Biegemaschine, im vorliegenden Ausführungsbeispiel eine Biegepresse 3, insbesondere eine Abkantpresse oder Gesenkbiegepresse, zur Herstellung der Werkstücke 2 bzw. Werkteile zwischen zumindest einem relativ zueinander verstellbaren Biegewerkzeug 4. Das Biegewerkzeug 4 umfasst im vorliegenden Ausführungsbeispiel zumindest einen Biegestempel 5, zumeist jedoch mehrere Biegestempel 5, und zumindest ein Biegegesenk 6, zumeist jedoch mehrere damit zusammenwirkende Biegegesenke 6. Der zumindest eine Biegestempel 5 ist dabei oberhalb des zu fertigenden Werkstücks 2 an der Biegepresse 3 angeordnet und dort auch entsprechend gehalten, insbesondere geklemmt. Auch das zumindest eine Biegegesenk 6 ist an der Biegepresse 3 gehalten, insbesondere geklemmt.

Als Koordinatensystem wird bei derartigen Biegepressen 3 grundsätzliches als "X"-Richtung jene bezeichnet, welche in einer Horizontalebene sowie in senkrechter Ausrichtung bezüglich der Längserstreckung des Biegewerkzeugs 4, insbesondere dessen Biegestempel 5 sowie Biegegesenk 6 verläuft. Somit ist dies jene Richtung, welche auch der Zufuhrrichtung oder der Entnahmerichtung entspricht. Als "Y"-Richtung wird die Vertikalrichtung verstanden, welche somit in Höhenrichtung des Biegewerkzeugs 4 verläuft. Schließlich wird als "Z"-Richtung jene Richtung verstanden, welche in Längsrichtung bzw. in der Längserstreckung des Biegewerkzeugs 4, insbesondere dessen Biegestempel 5 sowie Biegegesenk 6, verläuft. Damit ist auch die Längserstreckung der vom Biegewerkzeug 4 definierten Biegekante in der "Z"-Richtung verlaufend ausgerichtet.

Ein Maschinengestell 7 der Biegepresse 3 umfasst beispielsweise eine Bodenplatte 8, auf der vertikal aufragend, zueinander in Querrichtung beabstandet und parallel zueinander ausgerichtete Seitenwangen 9, 10 angeordnet sind. Diese sind bevorzugt durch einen massiven, beispielsweise aus einem Blechformteil gebildeten Querverband 11 an ihren von der Bodenplatte 8 distanzierten Endbereichen miteinander verbunden.

Die Seitenwangen 9, 10 können zur Bildung eines Freiraums für das Umformen des Werkstücks 2 etwa C - förmig ausgebildet sein, wobei an Frontstirnflächen 12 von bodennahen Schenkeln der Seitenwangen 9, 10 ein feststehender, insbesondere auf der Bodenplatte 8 aufstehender Pressbalken 13 befestigt ist. Dieser ortsfest angeordnete und feststehende Pressbalken 13 kann auch als Presstisch bezeichnet werden, an dem Teile des Biegewerkzeugs 4 angeordnet und auch gehalten sind. An Frontstirnflächen 14 von von der Bodenplatte 8 entfernten Schenkeln ist in Linearführungen 15 ein zu dem den Tischbalken bildenden Pressbalken 13 relativ verstellbarer weiterer Pressbalken 16, insbesondere ein Druckbalken, geführt gelagert. Auf einander gegenüberliegenden, parallel zueinander verlaufenden Stirnflächen 17, 18 der beiden Pressbalken 13, 16 können Werkzeugaufnahmen 19, 20 zur Bestückung mit dem oder den Biegewerkzeugen 4 angeordnet sein. Das oder die Biegewerkzeuge 4 können auch unter Zwischenschaltung eines nicht näher dargestellten Adapters an den Werkzeugaufnahmen 19, 20 gehalten sein, wobei dies für einen Wechselvorgang einzelner Komponenten oder des gesamten Biegewerkzeugs 4 eher als nicht günstig angesehen wird, jedoch auch eine Möglichkeit darstellt.

Die gezeigte Biegepresse 3 weist als Antriebsanordnung 21 für den verstellbaren Pressbalken 16, nämlich den Druckbalken, z.B. zwei mit elektrischer Energie betriebene Antriebsmittel 22 auf, die mit einer aus einem Energienetz 23 angespeisten Steuervorrichtung 24 leitungsverbunden sind. Über ein mit der Steuervorrichtung 24 kommunikationsverbundenes Eingabeterminal 25 kann beispielsweise der Betrieb der Biegepresse 3, insbesondere auch der Wechselvorgang des Biegewerkzeugs 4, gesteuert werden.

Bei den Antriebsmitteln 22 kann es sich z.B. um elektromotorische Spindeltriebe 26 handeln, wie sie allgemein bekannt sind, von denen Stellmittel 27 für eine reversible Stellbewegung des durch den Druckbalken gebildeten oberen Pressbalkens 16 mit diesem, zum Beispiel antriebsverbunden sind. Unabhängig davon wäre es aber auch noch möglich, das oder die Antriebsmittel 22 durch hydraulisch und/oder pneumatisch betätigbare Stellmittel zu bilden. Dabei können Zylinder-Kolbenanordnungen Anwendung finden. Es wären aber auch andere Antriebsmittel, wie z.B. Exzenterantriebe, Kniehebelantriebe, Zahnstangenantriebe usw. denkbar.

Auf weitere für den Betrieb einer derartigen Biegepresse 3 erforderliche Details, wie beispielsweise Sicherheitseinrichtungen, Zufuhrvorrichtungen und/oder Kontrollvorrichtungen, wird in der gegenständlichen Beschreibung zur Vermeidung einer unnötigen Länge der Beschreibung verzichtet.

Weiters kann die Fertigungsanlage 1 auch noch einen hier nicht näher dargestellten Manipulator umfassen, welcher von einem Vorratsstapel von zu verformenden bzw. abzukantenden Blechen zumindest ein Stück davon entnimmt und in den Arbeitsbereich bzw. die Bedienseite der Biegepresse 3 verbringt.

Der Manipulator kann seinerseits eine Greifzange umfassen, die ihrerseits Greiffinger aufweist. Die Greiffinger weisen an der dem zu fertigenden Werkstück 2 zugewendeten Seite jeweils Klemmflächen auf. Durch eine entsprechende Verschwenkung der beiden Greiffinger gegeneinander und dem Aufbringen einer ausreichenden Klemmkraft, wird über das Zusammenwirken der Klemmflächen das Blech bzw. das zu fertigende Werkstück 2 vom Manipulator gehalten und entsprechend bewegt sowie positioniert. Mit den Greiffingern der Greifzange ist ein entsprechendes Greifen und in späterer Folge bedingt durch die Klemmbewegung ein ausreichender Halt für das aus dem Blech zu fertigende Werkstück 2 gewährleistet.

Weiters ist hier noch vereinfacht dargestellt, dass das oder die Biegewerkzeuge 4, insbesondere der Biegestempel 5 und/oder das Biegegesenk 6, zum Manipulieren oder Handhaben derselben jeweils zumindest eine eigene Ausnehmung 28, 29 aufweisen können. Unter Manipulieren des Biegewerkzeugs 4 wird hier verstanden, dass dieses bzw. deren Biegestempel 5 und/oder Biegegesenk 6 automatisiert von einem in der Fig. 2 vereinfacht dargestellten Werkzeugspeicher 30 entnommen und automatisch zu einer der Werkzeugaufnahmen 19, 20 der Pressbalken 13, 16 verbracht und dort eingesetzt sowie geklemmt gehaltert wird. Dabei kann auch von einem Werkzeug-Wechselsystem gesprochen werden, mit welchem die Tauschvorgänge mit den dazu notwendigen Anlagenteilen durchgeführt werden können. Die Anordnung und der Ausführung des Werkzeugspeichers 30 kann in Abhängigkeit vom Aufbau des Maschinengestells 7 in bekannter Weise erfolgen. Es könnten auch mehrere Werkzeugspeicher 30 vorgesehen werden, wobei auch ein seitliche Anordnung bezüglich der Pressbalken 13, 16 oder der Seitenwangen 9, 10 möglich ist.

Zum Tauschen des Biegewerkzeugs 4 oder der Biegewerkzeuge 4 werden diese nach der klemmenden Halterung aus den Werkzeugaufnahmen 19, 20 entnommen und durch ein anderes Biegewerkzeug 4 ersetzt. Dabei wird das zu tauschenden Biegewerkzeug 4 zumeist zurück in den Werkzeugspeicher 30 bzw. das Werkzeugdepot gebracht und sortiert abgelegt, um später für einen weiteren Biegevorgang dort wiederum entnommen und in der oder den Werkzeugaufnahmen 19, 20 eingesetzt zu werden. Für die Handhabung während des Tauschvorganges können die Ausnehmungen 28, 29 im Biegewerkzeug 4 dienen. Es wären aber auch andere Möglichkeiten denkbar, um eine klemmende Verbindung zwischen einer nachfolgend noch näher beschriebenen Werkzeug-Manipulationsvorrichtung 39 und dem Biegewerkzeug 4 bzw. dem das Biegewerkzeug 4 bildenden Biegestempel 5 und/oder Biegegesenk 6 bilden zu können.

Wie nun weiters aus der Fig. 2 zu ersehen ist, ist im vorliegenden Ausführungsbeispiel der Werkzeugspeicher 30 auf einer von einer Bedienseite abgewendeten Seite der Pressbalken 13, 16 angeordnet. Unter Bedienseite wird hier jener Bereich an der Biegepresse 3 verstanden, von dem aus die Zuführung sowie Hantierung der umzuformenden Bleche hin zum fertigen Werkstück 2 erfolgt. Eine Bedienperson ist im Frontbereich der Fertigungsanlage 1 vereinfacht dargestellt. Das Maschinengestell 7, insbesondere dessen Seitenwangen 9, 10, erstrecken sich ausgehend von der Bedienseite hin zu einer Rückseite des Maschinengestells 7, was in weiterer Folge als Tiefe bzw. Tiefenerstreckung der Biegepresse 3 insbesondere des Maschinengestells 7, bezeichnet wird. Die hier in Querrichtung der Biegepresse 3 voneinander distanzierten Seitenwangen 9, 10 des Maschinengestells 7 bilden eine Breite der Biegepresse 3 bzw. des Maschinengestells 7 aus, wobei sich in Richtung der Breite des Maschinengestells 7 gesehen, die Pressbalken 13, 16 mit den daran angeordneten bzw. ausgebildeten Werkzeugaufhahmen 19, 20 erstrecken. Dabei können die Pressbalken 13, 16 sowie die daran angeordneten Werkzeugaufnahmen 19, 20 auch noch seitlich über die Seitenwangen 9, 10 in "Z"-Richtung darüber hinaus in jeweils zueinander entgegengesetzter Richtung vorragen.

Zwischen den Seitenwangen 9, 10 sowie auf der von der Bedienseite abgewendeten Seite der Pressbalken 13, 16 ist weiters zumindest eine bevorzugt jedoch mehrere Hinteranschlageinheiten 31 vorgesehen bzw. angeordnet. Derartige Hinteranschlageinheiten 31 sind hinlänglich bekannt und es wird, um die Beschreibung nicht unnötig zu verlängern, hier auf eine detailliertere Beschreibung verzichtet. Die Hinteranschlageinheit 31 umfasst zumindest ein Anschlagelement 32, welches zum Positionieren des zu bearbeitenden Bleches auf der von der Bedienseite abgewendeten Seite der Pressbalken 13, 16 dient. Zumeist sind je Hinteranschlageinheit 31 zwei im rechten Winkel zueinander ausgerichtete Anschlagelement 32 vorgesehen, um so die Tiefe in "X"-Richtung und/oder die Breite in "Z"-Richtung für das zu positionierende Blech voreinstellen und für den durchzuführenden Biegevorgang festlegen zu können.

Zusätzlich kann das Anschlagelement 32 relativ bezüglich des Maschinengestells 7 verstellbar sein. Die Hinteranschlageinheit 31, insbesondere deren Anschlagelement 32, kann in mehrere Raumrichtungen verstellbar an einem Grundgestell 33 gelagert bzw. gehalten sein. Damit können je nach Anforderung unterschiedliche Stellungen oder Positionen des Anschlagelements 32 bezüglich des oder der Biegewerkzeuge 4 voreingestellt werden. So kann je nach durchzuführendem Biegevorgang der notwendige Anschlagabstand in "X"- und/oder in "Z"-Richtung für das Blech oder das bereits halbfertige Werkstück 2 eingestellt werden. Das Grundgestell 33 kann bevorzugt zwischen den beiden Seitenwangen 9, 10 und/oder in Richtung der Tiefe des Maschinengestells 7 verfahrbar sein. Die Verstellrichtungen verlaufen dabei in "X"-Richtung und in "Z"-Richtung und sind grundsätzlich geradlinig verlaufend. Zusätzlich kann das Anschlagelement 32 relativ bezüglich des Grundgestells 33 in vertikaler Richtung - also in "Y"-Richtung - verstellbar sein. Darüber hinaus könnte aber das Anschlagelement 32 auch noch in der "X-Z"-Ebene um eine vertikale Schwenkachse verschwenkbar bezüglich des Grundgestells 33 an diesem gelagert sein.

Die Hinteranschlageinheit 31 mit ihrem zumindest einen Anschlagelement 32 dient dazu, dass das zu verformende Blech beispielsweise am Biegegesenk 6 aufliegend soweit in Richtung der Tiefe des Maschinengestells 7 eingeschoben werden kann, bis der Verschiebeweg durch das zuerst vorpositionierte Anschlagelement 32 begrenzt ist. In diesem Zustand kommt zumeist eine Stirnkante des zu biegenden Blechs an einem zumeist als Anschlagfinger ausgebildeten Anschlagelement 32 zur Anlage. Je nach zu fertigendem Werkstück ist das Anschlagelement 32 mittels der gesamten Hinteranschlageinheit 31 verlagerbar und an den vordefinieren Stellen relativ bezüglich des Maschinengestells 7 positioniert. Bei einer Mehrfachanordnung von Anschlagelementen 32 jeweils an mehreren, bevorzugt unabhängig voneinander verstellbaren Hinteranschlageinheiten 31, kann eine hohe Vielfalt an Anschlagpositionen erreicht werden. Jede der Hinteranschlageinheiten 31 kann gemäß den eingetragenen Doppelpfeilen in Art eines Rastersystems stufenlos verstellt werden.

Weiters umfasst die Fertigungsanlage 1 auch noch eine vereinfacht dargestellte Werkzeug-Manipulationseinheit 34, welche zum Manipulieren und/oder zum Verbringen des Biegewerkzeugs 4 zwischen dem zumindest einen Werkzeugspeicher 30 und der oder den Werkzeugaufnahmen 19, 20 dient. Weiters kann die Werkzeug-Manipulationseinheit 34 auch noch zur Positionsveränderung des Biegewerkzeugs 4 relativ bezüglich der Werkzeugaufnahmen 19, 20 eingesetzt werden. Unter Positionsveränderung wird dabei verstanden, dass das Biegewerkzeug 4 entlang einer der Werkzeugaufnahmen 19 und/oder 20 in Längserstreckung derselben verlagert werden kann.

Die Werkzeug-Manipulationseinheit 34 umfasst im vorliegenden Ausführungsbeispiel einen Manipulatorarm 35, welcher seinerseits einen ersten Endbereich 36 und einen davon distanziert angeordneten zweiten Endbereich 37 aufweist. Der Manipulatorarm 35 ist weiters in seinem ersten Endbereich 36 am Grundgestell 33 der Hinteranschlageinheit 31 um eine, eine vertikale Ausrichtung aufweisende erste Schwenkachse 38 eigenständig und unabhängig von dem zumindest einen Anschlagelement 32 relativ bezüglich des Grundgestells 33 verschwenkbar daran gelagert. Aufgrund der vertikalen Ausrichtung der ersten Schwenkachse 38 und der senkrechten Ausrichtung des Manipulatorarms 35 bezüglich der ersten Schwenkachse 38, ist dieser in einer horizontal ausgerichteten Schwenkebene um die erste Schwenkachse 38 am Grundgestell 33 der Hinteranschlageinheit 31 verschwenkbar.

Weiters umfasst die Werkzeug-Manipulationseinheit 34 auch noch eine Werkzeug-Manipulationsvorrichtung 39, wobei diese in dem vom ersten Endbereich 36 distanziert angeordneten, zweiten Endbereich 37 des Manipulatorarms 35 angeordnet oder ausgebildet ist.

Zur Durchführung der Verstell- oder Schwenkbewegung des Manipulatorarms 35 um die erste Schwenkachse 38 ist weiters in der Fig. 2 vereinfacht eine Verstelleinheit 40 angedeutet, welche mit dem Manipulatorarm 35 in Antriebsverbindung steht. Die Verstelleinheit 40 ist dabei vereinfacht durch einen Kreis angedeutet, wobei die detailliertere Beschreibung in den nachfolgenden Figuren erfolgen wird.

Durch diese unabhängige Anordnung und Ausbildung der Werkzeug-Manipulationseinheit 34 mit deren Manipulatorarm 35, der Werkzeug-Manipulationsvorrichtung 39 und der Verstelleinheit 40, wird so die Möglichkeit geschaffen, dass auch ein seitlicher Randbereich des Maschinengestells 7, welcher außerhalb des möglichen Verfahrwegs der Hinteranschlageinheit 31 liegt, für die durchzuführende Werkzeug-Manipulation bedient werden kann.

Weiters ist es auch noch möglich, dass der Manipulatorarm 35 relativ bezüglich des Grundgestells 33 in Richtung der ersten Schwenkachse 38, also in "Y"-Richtung, zusätzlich verstellbar ist. Damit kann eine höhenmäßige Ausrichtung und Anpassung der Werkzeug-Manipulationsvorrichtung 39 entweder an die an der oberen Werkzeugaufnahme 19 des oberen Pressbalkens 16 oder an die an der unteren Werkzeugaufnahme 20 des unteren Pressbalkens 13 gehaltenen Biegewerkzeuge 4 durchgeführt werden.

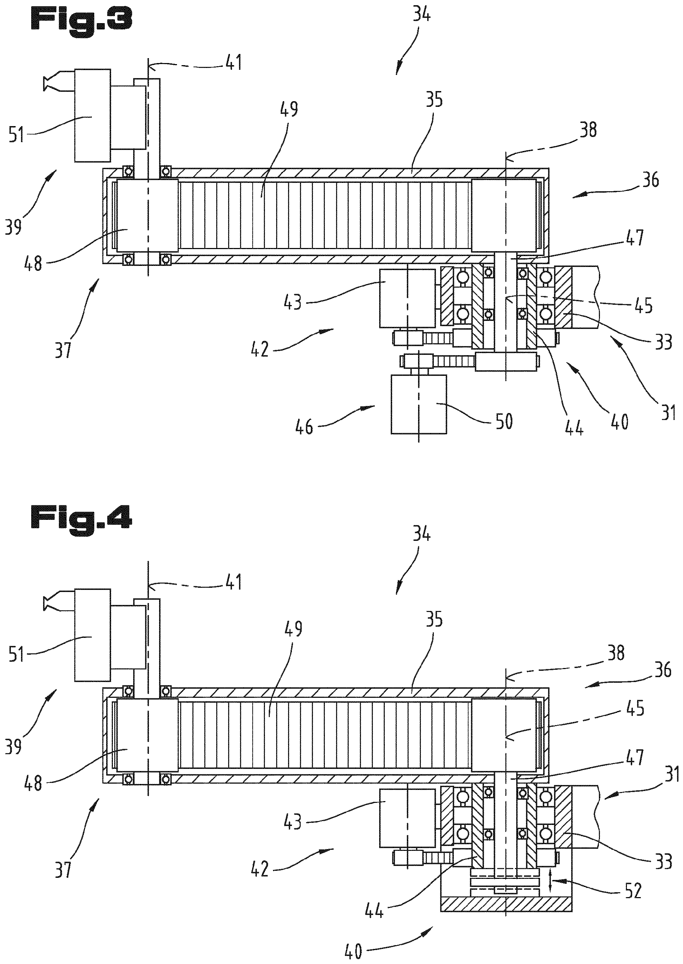

In der Fig. 3 ist eine gegebenenfalls für sich eigenständige Ausführungsform der Werkzeug-Manipulationseinheit 34 gezeigt, wobei wiederum für gleiche Teile gleiche Bezugszeichen bzw. Bauteilbezeichnungen wie in den vorangegangenen Fig. 1 und 2 verwendet werden. Um unnötige Wiederholungen zu vermeiden, wird auf die detaillierte Beschreibung in den vorangegangenen Fig. 1 und 2 hingewiesen bzw. Bezug genommen.

Die Werkzeug-Manipulationseinheit 34 ist hier in einem Vertikalschnitt dargestellt und umfasst den Manipulatorarm 35 mit seinen beiden Endbereichen 36 und 37. Der Manipulatorarm 35 kann beispielsweise als Hohlprofilkörper ausgebildet sein, welcher in seinen beiden Endbereichen 36, 37 auch noch verschlossen ausgebildet sein kann. In seinem ersten Endbereich 36 ist die zuvor beschriebene Verstelleinheit 40 vorgesehen bzw. angeordnet. Diese Verstelleinheit 40 kann gegebenenfalls am und/oder im Grundgestell 33 der Hinteranschlageinheit 31 angeordnet sein.

Der Manipulatorarm 35 ist seinerseits um die erste Schwenkachse 38 in seinem ersten Endbereich 36 verschwenkbar am Grundgestell 33 gelagert. In seinem zweiten Endbereich 37 ist die Werkzeug-Manipulationsvorrichtung 39 vereinfacht dargestellt.

Weiters ist hier noch dargestellt, dass auch die Werkzeug-Manipulationsvorrichtung 39 am Manipulatorarm 35 um eine zweite Schwenkachse 41 relativ bezüglich des Manipulatorarms 35 verschwenkbar daran gelagert ist. Dabei weist bevorzugt die zweite Schwenkachse 41 eine parallele Ausrichtung bezüglich der ersten Schwenkachse 38 auf. Dabei sei erwähnt, dass die erste Schwenkachse 38 und/oder die zweite Schwenkachse 41 eine körperliche Achse oder Welle darstellen kann. Zumindest eine der beiden Schwenkachsen 38 und/oder 41 kann aber auch nur eine imaginäre Achse, beispielsweise eine Mittelachse bzw. Drehachse, darstellen.

Die im Bereich des Grundgestells 33 angeordnete Verstelleinheit 40 für den Manipulatorarm 35 umfasst ihrerseits eine erste Antriebsvorrichtung 42, welche ein erstes Antriebsorgan 43 aufweist. Dabei steht das erste Antriebsorgan 43 mit dem Manipulatorarm 35 in Antriebsverbindung.

Die erste Antriebsvorrichtung 42 der Verstelleinheit 40 kann ein insbesondere rohrförmig ausgebildetes Lager- und Antriebselement 44 umfassen. Dabei steht das Lager- und Antriebselement 44 mit dem Manipulatorarm 35 in Antriebsverbindung. Weiters ist das Lager- und Antriebselement 44 bevorzugt am Grundgestell 33 der Hinteranschlageinheit 31 drehbar gelagert. Dabei sei erwähnt, dass das Grundgestell 33 der Hinteranschlageinheit 31 nur beispielhaft und abschnittsweise angedeutet ist.

Das erste Antriebsorgan 43 kann beispielsweise durch einen Motor oder dergleichen gebildet sein. Der das erste Antriebsorgan 43 bildende Motor kann beispielsweise über einen Zahnriemenantrieb, einen Keilriemenantrieb, einen Zahnradantrieb oder dergleichen mit dem Lager- und Antriebselement 44 in Antriebsverbindung stehen. Dies ist schematisch vereinfacht dargestellt. Die erste Antriebsvorrichtung 42 kann im Bereich des Lager- und Antriebselements 44 eine erste Antriebsachse 45 definieren, wobei diese bevorzugt koaxial bezüglich der ersten Schwenkachse 41 des Manipulatorarms 35 ausgerichtet ist.

Die erste Antriebsvorrichtung 42 der Verstelleinheit 40 dient dazu, den Manipulatorarm 35 um seine erste Schwenkachse 38 relativ bezüglich des Grundgestells 33 der Hinteranschlageinheit 31 verschwenken oder verdrehen zu können.

Weites kann die Verstelleinheit 40 eine zweite Antriebsvorrichtung 46 aufweisen, welche ihrerseits mit der Werkzeug-Manipulationsvorrichtung 39 in Antriebsverbindung steht. So kann die zweite Antriebsvorrichtung 46 eine Antriebswelle 47 und eine Abtriebswelle 48 aufweisen. Dabei ist die erste Antriebswelle 47 im ersten Endbereich 36 des Manipulatorarms 35 angeordnet und kann eine koaxiale Ausrichtung bezüglich der ersten Schwenkachse 38 des Manipulatorarms 35 aufweisen. Die Abtriebswelle 48 ist ihrerseits im zweiten Endbereich 37 des Manipulatorarms 35 angeordnet, wobei die Anordnung koaxial bezüglich der zweiten Schwenkachse 41 für die Werkzeug-Manipulationsvorrichtung 39 erfolgen kann. Durch die räumliche Trennung der Antriebswelle 47 von der Abtriebswelle 48 kann eine Antriebsverbindung zwischen diesen zum Beispiel über ein bevorzugt endlos ausgebildetes Antriebsmittel 49 erfolgen. Das Antriebsmittel 49 kann beispielsweise durch einen Flachriemen, einen Zahnriemen, einen Keilriemen, eine Kette oder dergleichen gebildet sein.

Unabhängig und eigenständig davon wäre es aber auch möglich, auf das Vorsehen der Antriebswelle 47 im ersten Endbereich 36 des Manipulatorarms 35 zu verzichten und beispielsweise die zweite Antriebsvorrichtung 46 direkt im Bereich der zweiten Schwenkachse 41 für die Werkzeug-Manipulationsvorrichtung 39 anzuordnen.

Die zweite Antriebsvorrichtung 46 der Verstelleinheit 40 kann weiters ein zweites Antriebsorgan 50 aufweisen, wobei das zweite Antriebsorgan 50 mit der Antriebswelle 47 in Antriebsverbindung steht. Das zweite Antriebsorgan 50 kann beispielsweise durch einen Motor oder dergleichen ausgebildet sein, wie dies bereits zuvor für das erste Antriebsorgan 43 beschrieben worden ist. Die Antriebsverbindung zwischen dem zweiten Antriebsorgan 50 und der Antriebswelle 47 kann über ein Getriebe, einen Zahn- oder Flachriemen, einen Keilriemen oder dergleichen erfolgen. Gleiches gilt aber auch für die Übertragung des Antriebsmoments vom ersten Antriebsorgan 43 auf den Manipulatorarm 35.

Weiters ist hier noch gezeigt, dass die Antriebswelle 47 zumindest abschnittsweise innerhalb des Lager- und Antriebselements 44 angeordnet sein kann. Darüber hinaus ist die Antriebswelle 47 im Lager- und Antriebselement 44 drehbar bzw. schwenkbar gelagert.

Durch das Vorsehen der beiden Antriebsorgane 43, 50 kann so eine voneinander unabhängige Schwenkbewegung des Manipulatorarms 35 sowie der Werkzeug-Manipulationsvorrichtung 39 erfolgen. Die Schwenk- oder Drehbewegung des Manipulatorarms 35 kann hier durch die erste Antriebsvorrichtung 42 durchgeführt werden. Bei einem Stillstand und Festhalten der zweiten Antriebsvorrichtung 46 und einem Antrieb bzw. einem Verschwenken des Manipulatorarms 35 mittels der ersten Antriebsvorrichtung 42 erfolgt durch die miteinander in Antriebsverbindung stehende Antriebswelle 47 und Abtriebswelle 48 mittels des endlosen Antriebsmittels 49 eine relative, gleichbleibende Ausrichtung der Werkzeug-Manipulationsvorrichtung 39 in Bezug auf die Pressbalken 13, 16 oder darin gehaltenen Biegewerkzeuge 4. Ist beispielsweise die Werkzeug-Manipulationsvorrichtung 39 in Richtung auf die Pressbalken 13, 16 zeigend ausgerichtet, bleibt auch bei einem Verschwenken des Manipulatorarms 35 diese Ausrichtung unverändert aufrecht.

Wird zusätzlich das zweite Antriebsorgan 50 und damit die Antriebswelle 47 sowie die über das Antriebsmittel 49 damit in Antriebsverbindung stehende Abtriebswelle 48 angetrieben, kommt es zu einem Verschwenken bzw. Verdrehen der Werkzeug-Manipulationsvorrichtung 39 um die zweite Schwenkachse 41. Mittels dieser überlagerten Verstellbewegung kann z.B. die relative Ausrichtung der Werkzeug-Manipulationsvorrichtung 39 bezüglich des Manipulatorarms 35 beibehalten werden oder eine dazu unterschiedliche Ausrichtung eingestellt werden.

Die Werkzeug-Manipulationsvorrichtung 39 kann ihrerseits eine erste Greifvorrichtung 51 aufweisen. Die erste Greifvorrichtung 51 kann beispielsweise Greiffinger aufweisen, welche zur klemmenden Halterung mit dem Biegewerkzeug 4, insbesondere dem Biegestempel 5 und/oder Biegegesenk 6 in Greifkontakt gebracht werden können. So wäre es möglich, die nicht näher bezeichneten Greiffinger der ersten Greifvorrichtung 51 in eine der zuvor in der Fig. 1 beschriebenen Ausnehmungen 28 und/oder 29 einzusetzen und mittels einer in entgegengesetzter Richtung wirkenden Klemmkraft die Greiffinger an die Innenwandung einer der Ausnehmungen 28, 29 anzulegen.

Die erste Greifvorrichtung 51 ist hier an der Abtriebswelle 48 angeordnet, insbesondere drehfest mit dieser verbunden. Weiters ist die erste Greifvorrichtung 51 bei diesem Ausführungsbeispiel oberhalb des Manipulatorarms 35 angeordnet und somit exzentrisch bezüglich seiner Längsachse angeordnet.

In der Fig. 4 ist eine weitere und gegebenenfalls für sich eigenständige Ausführungsform der Werkzeug-Manipulationseinheit 34 gezeigt, wobei wiederum für gleiche Teile gleiche Bezugszeichen bzw. Bauteilbezeichnungen wie in den vorangegangenen Fig. 1 bis 3 verwendet werden. Um unnötige Wiederholungen zu vermeiden, wird auf die detaillierte Beschreibung in den vorangegangenen Fig. 1 bis 3 hingewiesen bzw. Bezug genommen.

Diese hier gezeigte Ausführung der Werkzeug-Manipulationseinheit 34 ist nahezu gleich ausgebildet, wie diese zuvor in der Fig. 3 beschrieben worden ist. Deshalb wird hier nur mehr auf die zu der in der Fig. 3 dazu unterschiedlichen Ausbildungen näher darauf eingegangen.

Die Werkzeug-Manipulationseinheit 34 kann wiederum am Grundgestell 33 der Hinteranschlageinheit 31 um die erste Schwenkachse 38 verschwenkbar gelagert sein. Diese umfasst wiederum den Manipulatorarm 35 mit seinen beiden Endbereichen 36 und 37, wobei im zweiten Endbereich 37 die Werkzeug-Manipulationsvorrichtung 39 angeordnet ist. Die Werkzeug-Manipulationsvorrichtung 39 ist um die zweite Schwenkachse 41 im zweiten Endbereich 37 relativ bezüglich des Manipulatorarms 35 verschwenkbar.

Im Gegensatz zu der zuvor in der Fig. 3 beschriebenen Ausführungsform der Verstelleinheit 40 umfasst diese hier lediglich die erste Antriebsvorrichtung 42 mit dem ersten Antriebsorgan 43 und das mit dem Manipulatorarm 35 in Antriebsverbindung stehenden Lager- und Antriebselement 44. Das Lager- und Antriebselement 44 definiert wiederum die erste Antriebsachse 45, welche koaxial bezüglich der ersten Schwenkachse 38 ausgerichtet ist. Das erste Antriebsorgan 43 steht mit dem Lager- und Antriebselement 44 in Antriebsverbindung, wie des bereits zuvor beschrieben worden ist. Das Lager- und Antriebselement 44 ist seinerseits am Grundgestell 33 drehbar bzw. schwenkbar gelagert. Bei diesem Ausführungsbeispiel wird bei der Verstelleinheit 40 auf die Anordnung der zweiten Antriebsvorrichtung 46, wie diese zuvor in der Fig. 3 beschrieben worden ist, verzichtet. Es sind jedoch wiederum die Antriebswelle 47, die Abtriebswelle 48 sowie das die beiden Wellen 47, 48 miteinander in Drehverbindung bzw. Antriebsverbindung bringende Antriebsmittel 49 vorgesehen.

Die Antriebswelle 47 ragt wiederum in den Manipulatorarm 35 hinein und durchragt das Lager- und Antriebselement 44. An der Antriebswelle 47 ist weiters auf der vom Manipulatorarm 35 abgewendeten Seite des Lager- und Antriebselements eine Kupplungsvorrichtung 52 vorgesehen. Die Kupplungsvorrichtung 52 dient dazu, die Antriebswelle 47 wahlweise entweder mit dem Manipulatorarm 35 und der mit dem Manipulatorarm 35 in Antriebsverbindung stehenden ersten Antriebsvorrichtung 42 oder aber mit dem Grundgestell 33 der Hinteranschlageinheit 31 zu kuppeln und jeweils damit in Antriebsverbindung zu bringen. Bevorzugt wird dabei die Antriebswelle 47 mit dem mit dem Manipulatorarm 35 verbundenen oder daran angeordneten Lager- und Antriebselement 44 in Antriebsverbindung gebracht.

Durch diese zueinander unterschiedlichen Kupplungsmöglichkeiten kann dabei je nach gewählter Kupplungsverbindung ein unterschiedlicher Bewegungsablauf, insbesondere für die Werkzeug-Manipulationsvorrichtung 39 und der relativen Ausrichtung der daran angeordneten Greifvorrichtung 51 erzielt werden.

Wird in einer ersten Kupplungsstellung die Drehverbindung der Antriebswelle 47 mit dem Manipulatorarm 35, insbesondere mit dem damit in Antriebsverbindung stehenden Lager- und Antriebselement 44, hergestellt, erfolgt bei einem Antrieb der ersten Antriebsvorrichtung 42 mit dessen ersten Antriebsorgan 43 eine Schwenkbewegung des Manipulatorarms 35 um die erste Schwenkachse 38. Durch diese gewählte erste Kupplungsverbindung der Antriebswelle 47 wird die relative Ausrichtung der Werkzeug-Manipulationsvorrichtung 39, insbesondere der an der Abtriebswelle 48 angeordneten Greifvorrichtung 51, bezüglich des Manipulatorarms 35 unverändert beibehalten. Weisen beispielsweise die Greiffinger der Greifvorrichtung 51 eine parallele Ausrichtung bezüglich der Längserstreckung des Manipulatorarms 35 auf, wird auch nach dem Verschwenken des Manipulatorarms 35 diese parallele Ausrichtung beibehalten.

Erfolgt jedoch in einer zweiten Kupplungsstellung die Kupplungsverbindung der Antriebswelle 47 mit dem Grundgestell 33 der Hinteranschlageinheit 31, kann bei einer durchgeführten Schwenkbewegung des Manipulatorarms 35 die relative Ausrichtung der Werkzeug-Manipulationsvorrichtung 39 in Bezug auf das in den Werkzeugaufnahmen 19, 20 gehaltene Biegewerkzeug 4 unverändert beibehalten werden. Die relative Lage oder Position der Greifvorrichtung 51 bezüglich des Maschinengestells 7 kann durch die durchgeführte Schwenkbewegung des Manipulatorarms 35 jedoch verändert werden.

Durch das Vorsehen der Kupplungsvorrichtung 52 kann auf die Anordnung der zweiten Antriebsvorrichtung 46 verzichtet werden, wobei jedoch dann eine relative Verstellung der Werkzeug-Manipulationsvorrichtung 39 bezüglich des Manipulatorarms 35 nur gleichzeitig mit der Schwenk- bzw. Drehbewegung des Manipulatorarms 35 um die erste Schwenkachse 38 möglich ist.

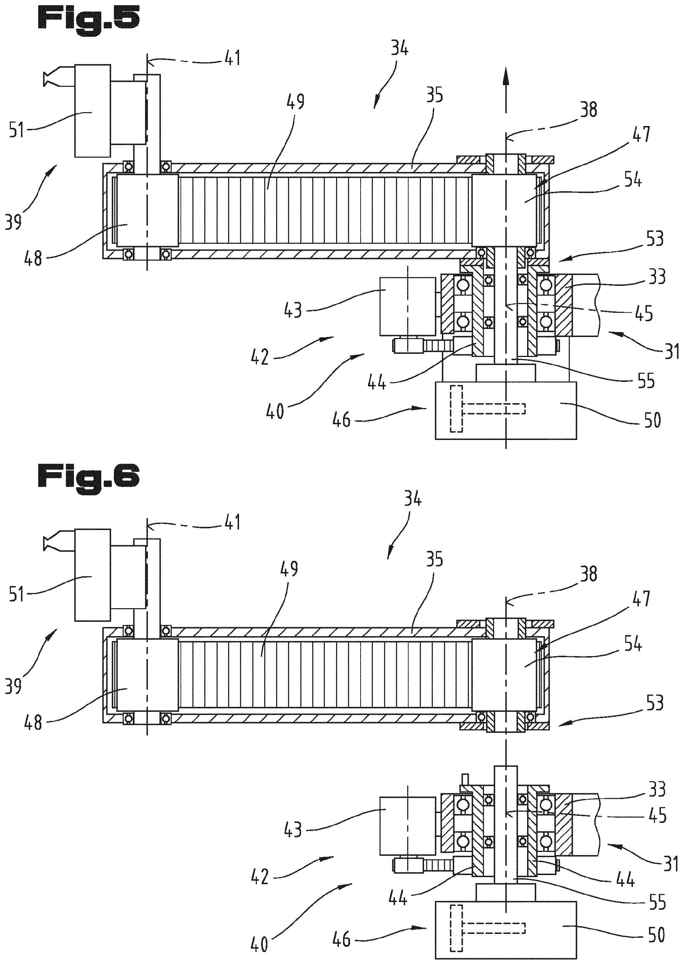

In den Fig. 5 bis 8 ist eine weitere und gegebenenfalls für sich eigenständige Ausführungsform der Werkzeug-Manipulationseinheit 34 gezeigt, wobei wiederum für gleiche Teile gleiche Bezugszeichen bzw. Bauteilbezeichnungen wie in den vorangegangenen Fig. 1 bis 4 verwendet werden. Um unnötige Wiederholungen zu vermeiden, wird auf die detaillierte Beschreibung in den vorangegangenen Fig. 1 bis 4 hingewiesen bzw. Bezug genommen.

Die in diesen Figuren dargestellte Werkzeug-Manipulationseinheit 34 umfasst wiederum den Manipulatorarm 35 mit seinen beiden Endbereichen 36 und 37. Der grundsätzliche Aufbau entspricht wiederum jenen, wie dieser bereits in der Fig. 3 detailliert beschrieben worden ist. Um unnötige Wiederholungen zu vermeiden, wird auf die Beschreibung in der Fig. 3 hingewiesen bzw. Bezug genommen.

So ist hier vorgesehen, dass der Manipulatorarm 35 mit der daran angeordneten Werkzeug-Manipulationsvorrichtung 39 von der Verstelleinheit 40, insbesondere der ersten Antriebsvorrichtung 42 abnehmbar ausgebildet ist. Das Lager- und Antriebselement 44, welches mit dem ersten Antriebsorgan 43 die erste Antriebsvorrichtung 42 für den Manipulatorarm 35 ausbildet, ist wiederum dreh- und schwenkbar am oder im Grundgestell 33 der Hinteranschlageinheit 31 gelagert. Der Manipulatorarm 35 ist hier mittels einer Kopplungsvorrichtung 53 mit der ersten Antriebsvorrichtung 42 drehfest koppelbar. Dies erfolgt insbesondere mit deren Lager- und Antriebselement 44.

Weiter ist die Antriebswelle 47 in deren Axialerstreckung geteilt ausgebildet und umfasst einen ersten Antriebswellenteil 54 sowie einen zweiten Antriebswellenteil 55. Der erste Antriebswellenteil 54 ist im bzw. innerhalb des Manipulatorarms 35 angeordnet und dort gelagert. Dieser steht weiters über das Antriebsmittel 49 mit der Abtriebswelle 48 in Antriebsverbindung. Der zweite Antriebswellenteil 55 ist an der Hinteranschlageinheit 31, insbesondere innerhalb des Lager- und Antriebselements 44 angeordnet und dort drehbar gelagert. Die beiden Antriebswellenteile 54 und 55 stehen in der Kopplungsstellung der Kopplungsvorrichtung 53 ebenfalls miteinander in Antriebsverbindung, sind jedoch miteinander lösbar bzw. entkoppelbar verbunden. Dies kann z.B. durch eine formschlüssig ausgebildete Steckverbindung erfolgen.

Dadurch wird es möglich, den Manipulatorarm 35 nach Lösen der Kopplungsvorrichtung 53 von der Verstelleinheit 40, insbesondere dem Lager- und Antriebselement 44 zu entkoppeln und abzunehmen, wie dies in der Fig. 6 vereinfacht dargestellt ist. Die Antriebsverbindung zwischen dem ersten Antriebswellenteil 54 der Antriebswelle 47 und der Abtriebswelle 48 über das Antriebsmittel 49 bleibt unverändert aufrecht erhalten.

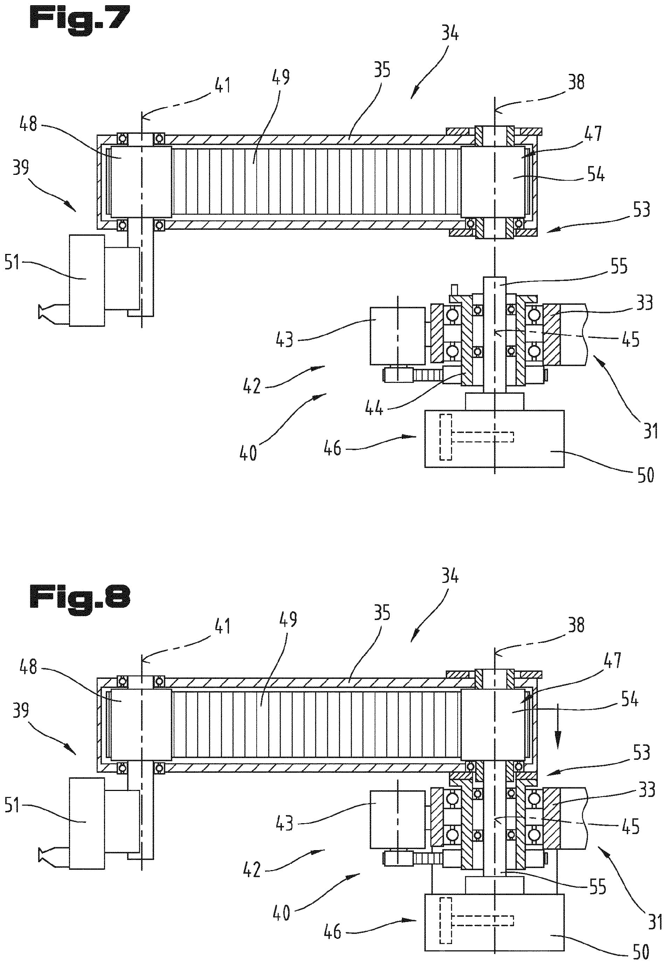

In der Fig. 7 ist gezeigt, dass der Manipulatorarm 35 in seiner horizontalen Lage um einen Winkel von 180° um seine Längsachse verschwenkt worden ist, sodass die Greifvorrichtung 51 der Werkzeug-Manipulationsvorrichtung 39 von seiner zuerst oberhalb des Manipulatorarms 35 befindlichen Stellung in eine unterhalb des Manipulatorarms 35 befindliche Stellung verbracht wird. In dieser, um seine Längsachse verschwenkten Stellung wird der Manipulatorarm 35 wiederum mit mittels der Kopplungsvorrichtung 53 mit der ersten Antriebsvorrichtung 42, insbesondere deren Lager- und Antriebselement 44 drehfest gekoppelt, wie dies in der Fig. 8 dargestellt ist. Damit kann ein Höhenversatz der Greifvorrichtung 51 bezüglich des Manipulatorarms 35 sowie der Verstelleinheit 40 erzielt werden.

Der Antrieb der Antriebswelle 47, insbesondere deren Antriebswellenteile 54, 55, kann ebenfalls wiederum über die zweite Antriebsvorrichtung 46 mittels einem zweiten Antriebsorgan 50 erfolgen. In diesem Ausführungsbeispiel ist ein Pneumatikmotor vorgesehen, welcher beispielsweise einen Schwenkwinkel von 180° durchführen kann. Es wäre aber auch eine Ausbildung und Anordnung der zweiten Antriebsvorrichtung 46 möglich, wie diese zuvor in der Fig. 3 beschrieben worden ist. Unabhängig davon könnte aber auch die Kupplungsvorrichtung 52 eingesetzt werden, wie diese in der Fig. 4 beschrieben worden ist.

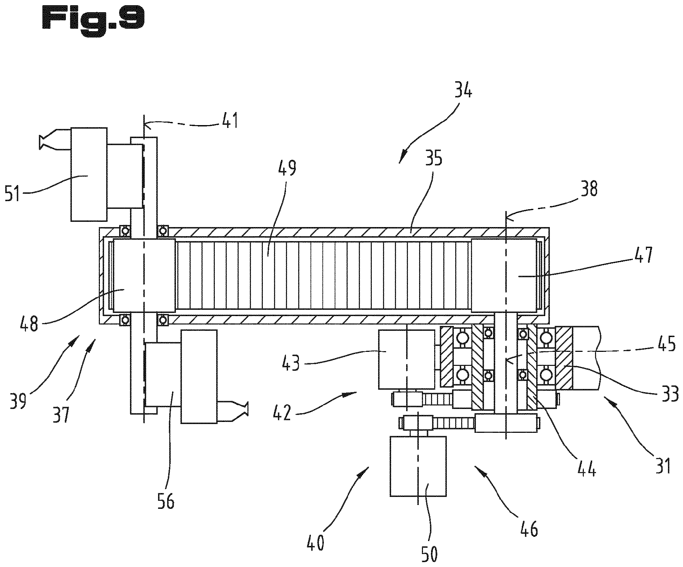

In der Fig. 9 ist eine weitere und gegebenenfalls für sich eigenständige Ausführungsform der Werkzeug-Manipulationseinheit 34 gezeigt, wobei wiederum für gleiche Teile gleiche Bezugszeichen bzw. Bauteilbezeichnungen wie in den vorangegangenen Fig. 1 bis 8 verwendet werden. Um unnötige Wiederholungen zu vermeiden, wird auf die detaillierte Beschreibung in den vorangegangenen Fig. 1 bis 8 hingewiesen bzw. Bezug genommen.

Die hier gezeigte Ausführungsform der Werkzeug-Manipulationseinheit 34 entspricht jener, wie diese zuvor bereits detailliert in der Fig. 3 beschrieben worden ist. Die Werkzeug-Manipulationseinheit 34 umfasst wiederum den Manipulatorarm 35 mit der im ersten Endbereich 36 angeordneten Verstelleinheit 40 sowie der im zweiten Endbereich 37 angeordneten Werkzeug-Manipulationsvorrichtung 39. Die Verstelleinheit 40 kann wiederum die erste Antriebsvorrichtung 42 sowie die zweite Antriebsvorrichtung 46 aufweisen.

Weiters ist hier vorgesehen, dass die Werkzeug-Manipulationsvorrichtung 39 zusätzlich zur ersten Greifvorrichtung 51 eine zweite Greifvorrichtung 56 aufweist. Die zweite Greifvorrichtung 56 ist dabei ebenfalls an der Abtriebswelle 48 angeordnet. Diese weist jedoch bezüglich der ersten Greifvorrichtung 51 eine dazu entgegengesetzte Ausrichtung bezüglich der zweiten Schwenkachse 41 auf. Die entgegengesetzte Ausrichtung bezüglich der zweiten Schwenkachse 41 beträgt dabei einen Winkel von 180°. Die Abtriebswelle 48 ragt hier beidseits über den Manipulatorarm 35 vor, wobei die erste Greifvorrichtung 51 oberhalb des Manipulatorarms 35 und die zweite Greifvorrichtung 56 unterhalb des Manipulatorarms 35 angeordnet ist. Durch die zueinander entgegengesetzte Ausrichtung der beiden Greifvorrichtungen 51, 56 kann bei Einsatz einer der Greifvorrichtungen 51, 56 die andere der Greifvorrichtungen 56, 51 nicht mit den Pressbalken 13, 16, insbesondere deren Werkzeugaufhahmen 19, 20 oder dem Biegewerkzeug 4 kollidieren und somit nicht im Weg stehen. Dadurch können ungewollte Kollisionen zwischen der Werkzeug-Manipulationseinheit 34 und dem Biegewerkzeug 4, den Werkzeugaufnahmen 19, 20 oder den Pressbalken 13, 16 vermieden werden.

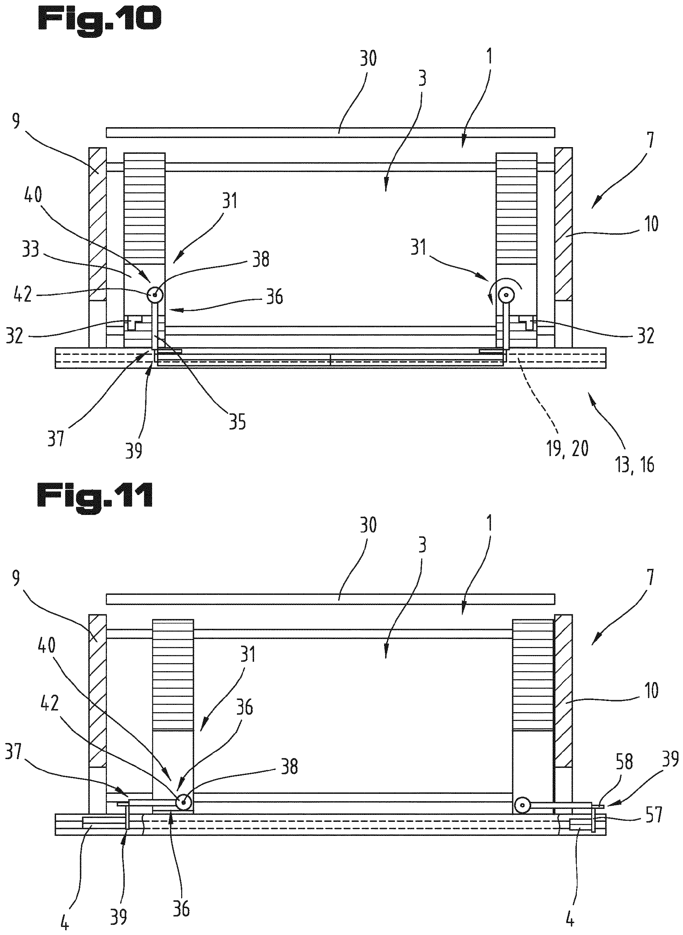

In den Fig. 10 und 11 ist eine weitere und gegebenenfalls für sich eigenständige Ausführungsform der Werkzeug-Manipulationseinheit 34 sowie das Maschinengestell 7 stark vereinfacht gezeigt, wobei wiederum für gleiche Teile gleiche Bezugszeichen bzw. Bauteilbezeichnungen wie in den vorangegangenen Fig. 1 bis 9 verwendet werden. Um unnötige Wiederholungen zu vermeiden, wird auf die detaillierte Beschreibung in den vorangegangenen Fig. 1 bis 9 hingewiesen bzw. Bezug genommen.

Bei diesem hier gezeigten Ausführungsbeispiel ist der Manipulatorarm 35 in seinem ersten Endbereich 36 am Grundgestell 33 der Hinteranschlageinheit 31 um die eine vertikale Ausrichtung aufweisende, erste Schwenkachse 38 eigenständig und unabhängig von dem zumindest einen Anschlagelement 32 verschwenkbar gelagert. Zur Durchführung der Schwenkbewegung des Manipulatorarms 35 ist wiederum die Verstelleinheit 40 vorgesehen. Im vorliegenden Ausführungsbeispiel umfasst die Verstelleinheit 40 lediglich die erste Antriebsvorrichtung 42 zur Durchführung der Schwenkbewegung des Manipulatorarms 35.

Weiters ist hier vorgesehen, dass die Werkzeug-Manipulationsvorrichtung 39 im Bereich des zweiten Endbereichs 37 des Manipulatorarms 35 feststehend mit dem Manipulatorarm 35 verbunden ist. Deshalb kann auf das Vorsehen bzw. Anordnen der zweiten Antriebsvorrichtung 46 verzichtet werden.

Die Werkzeug-Manipulationsvorrichtung 39 kann zumindest zwei, einen rechten Winkel einschließende Manipulatorfinger 57, 58 aufweisen. Weiters können die beiden Manipulatorfinger 57, 58 bezüglich der ersten Schwenkachse 38 jeweils eine senkrechte Längsausrichtung bezüglich dieser aufweisen. Es kann einer der Manipulatorfinger 57, 58 im rechten Winkel bezüglich der Längserstreckung des Manipulatorarms ausgerichtet sein. Der andere der Manipulatorfinger 58, 57 kann in Richtung der Längserstreckung des Manipulatorarms 35 ausgerichtet sein und über den Manipulatorarm 35 darüber hinaus vorragend ausgebildet sein.

Damit kann je nach relativer Stellung des Manipulatorarms 35 bezüglich der Längserstreckung der Werkzeugaufnahmen 19, 20 zumindest einer der Manipulatorfinger 57, 58 im Zusammenwirken mit der verfahrbaren Hinteranschlageinheit 31 abwechselnd mit den zu positionierenden Biegewerkzeugen 4 in Kontakt gebracht werden, wie dies aus den beiden Fig. 10 und 11 zu ersehen ist. So kann auch trotz der feststehenden Anordnung der Manipulatorfinger 57, 58 am Manipulatorarm 35 eine seitliche Bedienung jenes Bereichs der Werkzeugaufhahmen 19, 20 erfolgen, welcher im Bereich der Seitenwangen 9, 10 sowie außerhalb dieser angeordnet ist.

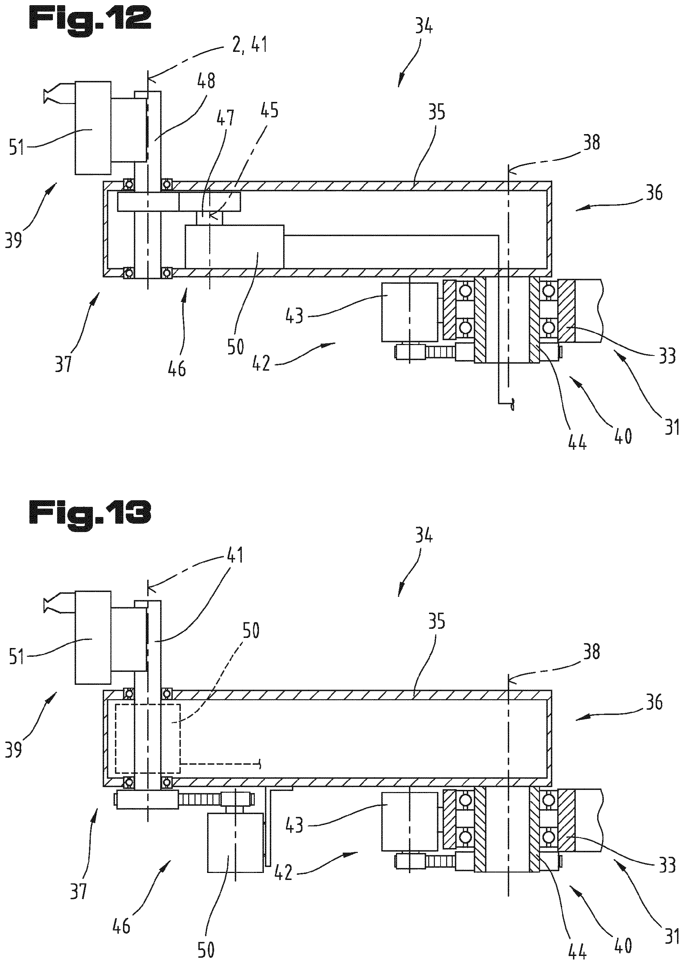

In der Fig. 12 ist eine weitere und gegebenenfalls für sich eigenständige Ausführungsform der Werkzeug-Manipulationseinheit 34 gezeigt, wobei wiederum für gleiche Teile gleiche Bezugszeichen bzw. Bauteilbezeichnungen wie in den vorangegangenen Fig. 1 bis 11 verwendet werden. Um unnötige Wiederholungen zu vermeiden, wird auf die detaillierte Beschreibung in den vorangegangenen Fig. 1 bis 11 hingewiesen bzw. Bezug genommen.

Die Werkzeug-Manipulationseinheit 34 ist auch hier im Vertikalschnitt dargestellt und umfasst den Manipulatorarm 35 mit seinen beiden Endbereichen 36 und 37. In seinem ersten Endbereich 36 ist ein Teil der zuvor beschriebenen Verstelleinheit 40 vorgesehen bzw. angeordnet. Die Verstelleinheit 40 ist auch hier wiederum am und/oder im Grundgestell 33 der Hinteranschlageinheit 31 angeordnet.

Am Manipulatorarm 35 ist das insbesondere rohrförmig ausgebildete Lager- und Antriebselement 44 angeordnet, insbesondere mit diesem feststehend verbunden. Dieses bildet für den Manipulatorarm 35 die erste Schwenkachse 38 aus. Zur Durchführung der relativen Schwenkbewegung des Manipulatorarms 35 um die erste Schwenkachse 38 ist die erste Antriebsvorrichtung 42 mit dem ersten Antriebsorgan 43 vorgesehen.

Der Manipulatorarm 35 weist weiters in seinem zweiten Endbereich 37 die Werkzeug-Manipulationsvorrichtung 39 auf, welche im vorliegenden Ausführungsbeispiel an der die zweite Schwenkachse 41 definierenden Abtriebswelle 48 angeordnet oder ausgebildet ist. Die zweite Antriebsvorrichtung 46 umfasst bei diesem Ausführungsbeispiel das zweite Antriebsorgan 50, beispielsweise einen Motor, bei welchem beispielsweise die Motorwelle die Antriebswelle 47 der zweiten Antriebsvorrichtung 46 ausbildet. Dabei definiert die Antriebswelle 47 auch gleichzeitig die erste Antriebsachse 45.

Zur Übertragung des Dreh- bzw. Schwenkmomentes ist hier ein Zahnradantrieb vorgesehen, wobei dieser Zahnradantrieb nur stark vereinfacht dargestellt worden ist. Es wäre aber auch möglich, anstatt des Zahnradantriebes ein Getriebe, einen Riemenantrieb oder dergleichen vorzusehen. Damit wird es möglich ausgehend vom zweiten Antriebsorgan 50 über die Antriebswelle 47, den nicht näher bezeichneten Zahnradantrieb hin auf die Abtriebswelle 48 die gewünschte Schwenk- bzw. Drehbewegung für die daran angeordnete erste Greifvorrichtung 51 übertragen zu können. Die Abtriebswelle 48, welche die zweite Schwenkachse 41 definiert, ist ihrerseits drehbar am Manipulatorarm 35 in seinem zweiten Endbereich 37 gelagert. Die gesamte zweite Antriebsvorrichtung 46 ist hier innerhalb des Manipulatorarms 35 angeordnet.

Die Energieversorgung für das zweite Antriebsorgan 50 kann je nach gewählter Antriebsart in entsprechender Art und Weise erfolgen. Handelt es sich beispielsweise um einen mit elektrischer Energie angetriebenen Motor, kann die Energieversorgung über eine entsprechend angedeutete Leitungsverbindung erfolgen.

Damit kann wiederum eine eigene, unabhängige Schwenkbewegung des Manipulatorarms 35 um seine erste Schwenkachse 38 relativ bezüglich des Grundgestells 33 der Hinteranschlageinheit 31 durchgeführt werden. Die erste Greifvorrichtung 51 kann mittels der zweiten Antriebsvorrichtung 46 unabhängig von der ersten Antriebsvorrichtung 42 relativ bezüglich des Manipulatorarms 35 verschwenkt werden.

Weiters wäre es aber auch noch möglich, am Manipulatorarm 35 in seinem zweiten Endbereich 37 an der Abtriebswelle 48 auch noch die zuvor in der Fig. 9 beschriebene zweite Greifvorrichtung 56 vorzusehen. Unabhängig oder alternativ dazu wäre es aber auch noch möglich, zwischen dem Manipulatorarm 35 und dem Lager- und Antriebselement 44 die Kopplungsvorrichtung 53 vorzusehen, wie diese in den Fig. 5 bis 8 beschrieben worden ist.

In der Fig. 13 ist eine weitere und gegebenenfalls für sich eigenständige Ausführungsform der Werkzeug-Manipulationseinheit 34 gezeigt, wobei wiederum für gleiche Teile gleiche Bezugszeichen bzw. Bauteilbezeichnungen wie in den vorangegangenen Fig. 1 bis 12 verwendet werden. Um unnötige Wiederholungen zu vermeiden, wird auf die detaillierte Beschreibung in den vorangegangenen Fig. 1 bis 12 hingewiesen bzw. Bezug genommen.

Die hier dargestellte Werkzeug-Manipulationseinheit 34 ist auch in einem Vertikalschnitt dargestellt und umfasst den Manipulatorarm 35 mit seinen beiden Endbereichen 36 und 37. Im ersten Endbereich 36 des Manipulatorarms 35 ist ebenfalls ein Teil der zuvor beschriebene Verstelleinheit 40 für die Durchführung der Schwenkbewegung des Manipulatorarms 35 um seine erste Schwenkachse 38 vorgesehen. Dazu kann wiederum am Manipulatorarm 35 das insbesondere rohrförmig ausgebildete Lager- und Antriebselement 44 vorgesehen sein, welches seinerseits dreh- oder schwenkbar am Grundgestell 33 der Hinteranschlageinheit 31 gelagert ist. Das Lager- und Antriebselement 44 steht mit der ersten Antriebsvorrichtung 42 in Antriebsverbindung. Das erste Antriebsorgan 43 ist schematisch vereinfacht als Motor dargestellt. Die Antriebsverbindung kann hier beispielsweise durch einen Riemenantrieb, wie z.B. einen Zahnriemen, einen Keilriemen oder aber auch durch ein Zahnradgetriebe oder dergleichen erfolgen, wie dies auch bei den zuvor dargestellten Figuren angedeutet ist.

Im zweiten Endbereich 37 des Manipulatorarms 35 ist wiederum die zweite Schwenkachse 41 vorgesehen, welche im vorliegenden Ausführungsbeispiel auch gleichzeitig eine körperliche Achse zur Aufnahme und Halterung der zumindest einen Greifvorrichtung 51, 56 dient. Die zweite Schwenkachse 41 ist schwenkbar am Manipulatorarm 35 gelagert.

Zur Durchführung der Schwenkbewegung der zweiten Schwenkachse 41 und damit auch der zumindest einen daran angeordneten Greifvorrichtung 51, 56, ist auch hier die zweite Antriebsvorrichtung 46 mit dem zweiten Antriebsorgan 50 vorgesehen. Das zweite Antriebsorgan 50 steht dabei über einen Zahnriementrieb oder Keilriementrieb mit der zweiten Schwenkachse 41 in Antriebsverbindung. Des Weitern ist hier noch dargestellt, dass das zweite Antriebsorgan 50 nicht innerhalb des Manipulatorarms 35 sondern außerhalb desselben an diesem angeordnet bzw. gehalten ist.

Dabei wäre es zusätzlich auch noch möglich, jene Ausführungsform der Greifvorrichtungen 51, 56 vorzusehen, wie diese zuvor in der Fig. 9 beschrieben worden ist. Unabhängig oder alternativ dazu wäre es aber auch noch möglich, zwischen dem Manipulatorarm 35 und dem Lager- und Antriebselement 44 wiederum die lösbare Verbindung in Form der Kopplungsvorrichtung 53 vorzusehen, wie diese in den Fig. 5 bis 8 beschrieben worden ist.

Weiters ist hier noch im Bereich des zweiten Endbereichs 37 des Manipulatorarms 35 in strichlierten Linien eine weitere, gegebenenfalls unabhängige Antriebsmöglichkeit für die zweite Schwenkachse 41 dargestellt. So wäre es möglich, das zweite Antriebsorgan 50 beispielsweise direkt im Bereich der zweiten Schwenkachse 41 anzuordnen und eine entsprechende Antriebsverbindung auszubilden. Dabei könnte das zweite Antriebsorgan 50 beispielsweise durch einen Rohrmotor oder dergleichen gebildet sein.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist. Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus der Fertigungsanlage 1, insbesondere deren Werkzeug-Manipulationseinheit 34, Elemente oder Bauteile derselben teilweise unmaßstäblich und/oder vergrößert und/oder verkleinert dargestellt wurden.

**Bezugszeichenaufstellung**

| | | | |
|---|---|---|---|
| 1 | Fertigungsanlage | 31 | Hinteranschlageinheit |
| 2 | Werkstück | 32 | Anschlagelement |
| 3 | Biegepresse | 33 | Grundgestell |
| 4 | Biegewerkzeug | 34 | Werkzeug-Manipulationseinheit |
| 5 | Biegestempel | 35 | Manipulatorarm |
| 6 | Biegegesenk | 36 | erster Endbereich |
| 7 | Maschinengestell | 37 | zweiter Endbereich |
| 8 | Bodenplatte | 38 | erste Schwenkachse |
| 9 | Seitenwange | 39 | Werkzeug-Manipulationsvorrichtung |
| 10 | Seitenwange | | |
| 11 | Querverband | 40 | Verstelleinheit |
| 12 | Frontstirnfläche | 41 | zweite Schwenkachse |
| 13 | Pressbalken | 42 | erste Antriebsvorrichtung |
| 14 | Frontstirnfläche | 43 | erstes Antriebsorgan |
| 15 | Linearführung | 44 | Lager- und Antriebselement |
| 16 | Pressbalken | 45 | erste Antriebsachse |
| 17 | Stirnfläche | 46 | zweite Antriebsvorrichtung |
| 18 | Stirnfläche | 47 | Antriebswelle |
| 19 | Werkzeugaufnahme | 48 | Abtriebswelle |
| 20 | Werkzeugaufnahme | 49 | Antriebsmittel |
| 21 | Antriebsanordnung | 50 | zweites Antriebsorgan |
| 22 | Antriebsmittel | 51 | erste Greifvorrichtung |
| 23 | Energienetz | 52 | Kupplungsvorrichtung |
| 24 | Steuervorrichtung | 53 | Kopplungsvorrichtung |
| 25 | Eingabeterminal | 54 | erster Antriebswellenteil |
| 26 | Spindeltrieb | 55 | zweiter Antriebswellenteil |
| 27 | Stellmittel | 56 | zweite Greifvorrichtung |
| 28 | Ausnehmung | 57 | Manipulatorfinger |
| 29 | Ausnehmung | 58 | Manipulatorfinger |
| 30 | Werkzeugspeicher | | |

## Patentansprüche

1. Fertigungsanlage (1), insbesondere für das Freiformbiegen von aus Blech zu fertigenden Werkstücken (2), umfassend
- eine Biegepresse (3), insbesondere Abkantpresse, mit einem Maschinengestell (7) und Pressbalken (13, 16) sowie an den Pressbalken (13, 16) angeordneten bzw. ausgebildeten Werkzeugaufnahmen (19, 20),
- zumindest ein Biegewerkzeug (4) mit mindestens einem Biegestempel (5) und mindestens einem Biegegesenk (6),
- zumindest einen Werkzeugspeicher (30) für zumindest ein Biegewerkzeug (4),
- zumindest eine Hinteranschlageinheit (31) mit einem Grundgestell (33) und zumindest einem Anschlagelement (32) zum Positionieren des zu bearbeitenden Bleches auf der von einer Bedienseite abgewendeten Seite der Pressbalken (13, 16),
- eine Werkzeug-Manipulationseinheit (34) zum Verbringen des Biegewerkzeugs (4) zwischen dem zumindest einen Werkzeugspeicher (30) und den Werkzeugaufnahmen (19, 20) oder zur Positionsveränderung des Biegewerkzeugs (4) relativ bezüglich der Werkzeugaufnahmen (19, 20), wobei die Werkzeug-Manipulationseinheit (34) an der Hinteranschlageinheit (31) angeordnet ist,
**dadurch gekennzeichnet, dass** die Werkzeug-Manipulationseinheit (34)
- einen Manipulatorarm (35) mit einem ersten Endbereich (36) und einem zweiten Endbereich (37) umfasst, welcher Manipulatorarm (35) in seinem ersten Endbereich (36) am Grundgestell (33) der Hinteranschlageinheit (31) um eine, eine vertikale Ausrichtung aufweisende, erste Schwenkachse (38) eigenständig und unabhängig von dem zumindest einen Anschlagelement (32) verschwenkbar gelagert ist,
- eine Verstelleinheit (40) aufweist, welche Verstelleinheit (40) mit dem Manipulatorarm (35) für die Durchführung der Schwenkbewegung in Antriebsverbindung steht,
- eine Werkzeug-Manipulationsvorrichtung (39) umfasst, und die Werkzeug-Manipulationsvorrichtung (39) im zweiten Endbereich (37) des Manipulatorarms (35) angeordnet ist.

2. Fertigungsanlage (1) nach Anspruch 1, **dadurch gekennzeichnet, dass** der Manipulatorarm (35) relativ bezüglich des Grundgestells (33) in Richtung der ersten Schwenkachse (38) verstellbar ist.

3. Fertigungsanlage (1) nach Anspruch 1 oder 2, **dadurch gekennzeichnet, dass** die Werkzeug-Manipulationsvorrichtung (39) am Manipulatorarm (35) um eine zweite Schwenkachse (41) relativ bezüglich des Manipulatorarms (35) verschwenkbar gelagert ist und die zweite Schwenkachse (41) eine parallele Ausrichtung bezüglich der ersten Schwenkachse (38) aufweist.

4. Fertigungsanlage (1) nach einem der vorhergehenden Ansprüche, **dadurch gekennzeichnet, dass** die Verstelleinheit (40) eine erste Antriebsvorrichtung (42) mit einem ersten Antriebsorgan (43) aufweist, welches erste Antriebsorgan (43) mit dem Manipulatorarm (35) in Antriebsverbindung steht und eine erste Antriebsachse (45) der ersten Antriebsvorrichtung (42) für den Manipulatorarm (35) koaxial bezüglich der ersten Schwenkachse (38) des Manipulatorarms (35) ausgerichtet ist.

5. Fertigungsanlage (1) nach Anspruch 4, **dadurch gekennzeichnet, dass** die erste Antriebsvorrichtung (42) der Verstelleinheit (40) ein insbesondere rohrförmig ausgebildetes Lager- und Antriebselement (44) umfasst, welches Lager- und Antriebselement (44) mit dem Manipulatorarm (35) in Antriebsverbindung steht und am Grundgestell (33) der Hinteranschlageinheit (31) drehbar gelagert ist und die erste Schwenkachse (38) definiert.

6. Fertigungsanlage (1) nach einem der vorhergehenden Ansprüche, **dadurch gekennzeichnet, dass** die Verstelleinheit (40) eine zweite Antriebsvorrichtung (46) aufweist, welche mit der Werkzeug-Manipulationsvorrichtung (39) in Antriebsverbindung steht.

7. Fertigungsanlage (1) nach Anspruch 6, **dadurch gekennzeichnet, dass** die zweite Antriebsvorrichtung (46) eine Antriebswelle (47) und eine damit in Antriebsverbindung stehende Abtriebswelle (48) aufweist, und dass die Abtriebswelle (48) im zweiten Endbereich (37) des Manipulatorarms (35) koaxial bezüglich der zweiten Schwenkachse (41) angeordnet ist.

8. Fertigungsanlage (1) nach Anspruch 7, **dadurch gekennzeichnet, dass** die Antriebswelle (47) im ersten Endbereich (36) des Manipulatorarms (35) angeordnet ist sowie in koaxialer Ausrichtung bezüglich der ersten Schwenkachse (38) des Manipulatorarms (35) ausgerichtet ist.

9. Fertigungsanlage (1) nach Anspruch 7 oder 8, **dadurch gekennzeichnet, dass** die Antriebswelle (47) über ein bevorzugt endlos ausgebildetes Antriebsmittel (49) mit der Abtriebswelle (48) in Antriebsverbindung steht.

10. Fertigungsanlage (1) nach einem der Ansprüche 7 bis 9, **dadurch gekennzeichnet, dass** die Antriebswelle (47) zumindest abschnittsweise innerhalb des Lager- und Antriebselements (44) angeordnet ist sowie drehbar im Lager- und Antriebselement (44) gelagert ist.

11. Fertigungsanlage (1) nach einem der Ansprüche 6 bis 10, **dadurch gekennzeichnet, dass** die zweite Antriebsvorrichtung (46) der Verstelleinheit (40) ein zweites Antriebsorgan (50) aufweist und das zweite Antriebsorgan (50) mit der Antriebswelle (47) in Antriebsverbindung steht.

12. Fertigungsanlage (1) nach einem der Ansprüche 6 bis 10, **dadurch gekennzeichnet, dass** an der Antriebswelle (47) der Verstelleinheit (40) eine Kupplungsvorrichtung (52) angeordnet ist und die Antriebswelle (47) mittels der Kupplungsvorrichtung (52) wahlweise entweder mit dem Manipulatorarm (35), insbesondere mit dem damit in Antriebsverbindung stehenden Lager- und Antriebselement (44), und der mit dem Manipulatorarm (35) in Antriebsverbindung stehenden ersten Antriebsvorrichtung (42) oder mit dem Grundgestell (33) der Hinteranschlageinheit (31) kuppelbar ist.

13. Fertigungsanlage (1) nach einem der vorhergehenden Ansprüche, **dadurch gekennzeichnet, dass** die Antriebswelle (47) in deren Axialerstreckung geteilt ausgebildet ist und ein erster Antriebswellenteil (54) im Manipulatorarm (35) und ein zweiter Antriebswellenteil (55) an der Hinteranschlageinheit (31) angeordnet ist und der Manipulatorarm (35) mittels einer Kopplungsvorrichtung (53) mit der ersten Antriebsvorrichtung (42), insbesondere deren Lager- und Antriebselement (44), drehfest gekoppelt ist, und in der Kopplungsstellung der erste Antriebswellenteil (54) mit dem zweiten Antriebswellenteil (55) in Antriebsverbindung steht.

14. Fertigungsanlage (1) nach Anspruch 6, **dadurch gekennzeichnet, dass** die zweite Antriebsvorrichtung (46) ein zweites Antriebsorgan (50) aufweist, welches zweite Antriebsorgan (50) am Manipulatorarm (35) oder innerhalb des Manipulatorarms (35) angeordnet ist und mit der zweiten Schwenkachse (41) der Werkzeug-Manipulationsvorrichtung (39) in Antriebsverbindung steht.

15. Fertigungsanlage (1) nach einem der vorhergehenden Ansprüche, **dadurch gekennzeichnet, dass** die Werkzeug-Manipulationsvorrichtung (39) eine erste Greifvorrichtung (51) aufweist, welche erste Greifvorrichtung (51) an der zweiten Schwenkachse (41) oder an der Abtriebswelle (48) angeordnet ist.

16. Fertigungsanlage (1) nach Anspruch 15, **dadurch gekennzeichnet, dass** die erste Greifvorrichtung (51) oberhalb des Manipulatorarms (35) angeordnet ist.

17. Fertigungsanlage (1) nach Anspruch, 15 oder 16, **dadurch gekennzeichnet, dass** die Werkzeug-Manipulationsvorrichtung (39) eine zweite Greifvorrichtung (56) aufweist, welche zweite Greifvorrichtung (56) ebenfalls an der zweiten Schwenkachse (41) oder an der Abtriebswelle (48) angeordnet ist, jedoch bezüglich der ersten Greifvorrichtung (51) eine dazu entgegengesetzte Ausrichtung aufweist.

18. Fertigungsanlage (1) nach Anspruch 17, **dadurch gekennzeichnet, dass** die zweite Greifvorrichtung (56) unterhalb des Manipulatorarms (35) angeordnet ist.

19. Fertigungsanlage (1) nach Anspruch 1 oder 2, **dadurch gekennzeichnet, dass** die Werkzeug-Manipulationsvorrichtung (39) feststehend mit dem Manipulatorarm (35) verbunden ist und zumindest zwei, einen rechten Winkel einschließende Manipulatorfinger (57, 58) aufweist, und dass die Manipulatorfinger (57, 58) bezüglich der ersten Schwenkachse (38) jeweils eine senkrechte Längsausrichtung aufweisen.

20. Fertigungsanlage (1) nach Anspruch 19, **dadurch gekennzeichnet, dass** einer der Manipulatorfinger (57, 58) im rechten Winkel bezüglich der Längserstreckung des Manipulatorarms (35) ausgerichtet ist und der andere Manipulatorfinger (58, 57) in Richtung der Längserstreckung des Manipulatorarms (35) über den Manipulatorarm (35) vorragt.

## Claims

1. A manufacturing plant (1), in particular for the free-form bending of workpieces (2) to be manufactured from sheet metal, comprising
- a bending press (3), in particular a press brake, having a machine frame (7) and pressing beams (13, 16) as well as tool receivers (19, 20) which are arranged and/or configured on the pressing beams (13, 16),
- at least one bending tool (4) having at least one bending punch (5) and at least one bending die (6),
- at least one tool store (30) for at least one bending tool (4),
- at least one rear stop unit (31) with a base frame (33) and at least one stop element (32) for positioning the sheet metal to be processed on the side of the pressing beams (13, 16) remote from an operating side,
- a tool manipulation unit (34) for moving the bending tool (4) between the at least one tool store (30) and the tool receivers (19, 20) or for altering the position of the bending tool (4) relative to the tool receivers (19, 20), wherein the tool manipulation unit (34) is arranged on the rear stop unit (31),
**characterised in that** the tool manipulation unit (34)
- comprises a manipulator arm (35) with a first end region (36) and a second end region (37), which manipulator arm (35) in its first end region (36) is pivotably mounted on the base frame (33) of the rear stop unit (31) about a first pivot axis (38) having a vertical alignment, separately and independently from the at least one stop element (32),
- comprises an adjusting unit (40), which adjusting unit (40) is drive-connected to the manipulator arm (35) for carrying out the pivoting movement,
- comprises a tool manipulation device (39) and the tool manipulation device (39) is arranged in the second end region (37) of the manipulator arm (35).

2. The manufacturing plant (1) according to claim 1, **characterised in that** the manipulator arm (35) is adjustable relative to the base frame (33) in the direction of the first pivot axis (38).

3. The manufacturing plant (1) according to claim 1 or 2, **characterised in that** the tool manipulation device (39) is pivotably mounted on the manipulator arm (35) about a second pivot axis (41) relative to the manipulator arm (35) and the second pivot axis (41) has a parallel alignment relative to the first pivot axis (38).

4. The manufacturing plant (1) according to one of the preceding claims, **characterised in that** the adjusting unit (40) comprises a first drive device (42) with a first drive member (43), which first drive member (43) is drive-connected to the manipulator arm (35) and a first drive axis (45) of the first drive device (42) for the manipulator arm (35) is aligned coaxially relative to the first pivot axis (38) of the manipulator arm (35).

5. The manufacturing plant (1) according to claim 4, **characterised in that** the first drive device (42) of the adjusting unit (40) comprises a bearing and drive element (44), in particular configured to be tubular, which bearing and drive element (44) is drive-connected to the manipulator arm (35) and is rotatably mounted on the base frame (33) of the rear stop unit (31) and defines the first pivot axis (38).

6. The manufacturing plant (1) according to one of the preceding claims, **characterised in that** the adjusting unit (40) comprises a second drive device (46) which is drive-connected to the tool manipulation device (39).

7. The manufacturing plant (1) according to claim 6, **characterised in that** the second drive device (46) comprises a drive shaft (47) and an output shaft (48), which is drive-connected therewith, and **in that** the output shaft (48) is arranged in the second end region (37) of the manipulator arm (35) coaxially relative to the second pivot axis (41).

8. The manufacturing plant (1) according to claim 7, **characterised in that** the drive shaft (47) is arranged in the first end region (36) of the manipulator arm (35) and is oriented in coaxial alignment relative to the first pivot axis (38) of the manipulator arm (35).

9. The manufacturing plant (1) according to claim 7 or 8, **characterised in that** the drive shaft (47) is drive-connected to the output shaft (48) via a drive means (49) which is preferably configured to be endless.

10. The manufacturing plant (1) according to one of claims 7 to 9, **characterised in that** the drive shaft (47) is at least partially mounted inside the bearing and drive element (44) and is rotatably mounted in the bearing and drive element (44).

11. The manufacturing plant (1) according to one of claims 6 to 10, **characterised in that** the second drive device (46) of the adjusting unit (40) comprises a second drive member (50) and the second drive member (50) is drive-connected to the drive shaft (47).

12. The manufacturing plant (1) according to one of claims 6 to 10, **characterised in that** a coupling device (52) is arranged on the drive shaft (47) of the adjusting unit (40) and by means of the coupling device (52) the drive shaft (47) is optionally able to be coupled either to the manipulator arm (35), in particular to the bearing and drive element (44) which is drive-connected therewith, and the first drive device (42) which is drive-connected to the manipulator arm (35), or to the base frame (33) of the rear stop unit (31).

13. The manufacturing plant (1) according to one of the preceding claims, **characterised in that** the drive shaft (47) is configured to be divided in the axial extent thereof and a first drive shaft part (54) is arranged in the manipulator arm (35) and a second drive shaft part (55) is arranged on the rear stop unit (31) and the manipulator arm (35) is coupled fixedly in terms of rotation by means of a coupling device (53) to the first drive device (42), in particular the bearing and drive element (44) thereof, and in the coupled position the first drive shaft part (54) is drive-connected to the second drive shaft part (55).

14. The manufacturing plant (1) according to claim 6, **characterised in that** the second drive device (46) comprises a second drive member (50), which second drive member (50) is arranged on the manipulator arm (35) or inside the manipulator arm (35) and is drive-connected to the second pivot axis (41) of the tool manipulation device (39).

15. The manufacturing plant (1) according to one of the preceding claims, **characterised in that** the tool manipulation device (39) comprises a first gripping device (51), which first gripping device (51) is arranged on the second pivot axis (41) or on the output shaft (48).

16. The manufacturing plant (1) according to claim 15, **characterised in that** the first gripping device (51) is arranged above the manipulator arm (35).

17. The manufacturing plant (1) according to claim 15 or 16, **characterised in that** the tool manipulation device (39) comprises a second gripping device (56), which second gripping device (56) is also arranged on the second pivot axis (41) or on the output shaft (48) but has an opposing alignment relative to the first gripping device (51).

18. The manufacturing plant (1) according to claim 17, **characterised in that** the second gripping device (56) is arranged below the manipulator arm (35).

19. The manufacturing plant (1) according to claim 1 or 2, **characterised in that** the tool manipulation device (39) is fixedly connected to the manipulator arm (35) and comprises at least two manipulator fingers (57, 58) enclosing a right-angle, and **in that** the manipulator fingers (57, 58) in each case have a perpendicular longitudinal alignment relative to the first pivot axis (38).

20. The manufacturing plant (1) according to claim 19, **characterised in that** one of the manipulator fingers (57, 58) is aligned at right-angles relative to the longitudinal extent of the manipulator arm (35) and the other manipulator finger (58, 57) protrudes over the manipulator arm (35) in the direction of the longitudinal extent of the manipulator arm (35).

## Revendications

1. Installation de fabrication (1), plus particulièrement pour le pliage à forme libre de pièces (2) à fabriquer en tôle, comprenant
- une presse de cintrage (3), plus particulièrement une presse plieuse, avec un châssis de machine (7) et des barres de pression (13, 16) ainsi que des logements d'outils (19, 20) disposés ou réalisés sur les barres de pression (13, 16),
- au moins un outil de pliage (4) avec au moins un poinçon de pliage (5) et au moins une matrice de pliage (6),
- au moins un magasin d'outils (30) pour au moins un outil de pliage (4),
- au moins une unité de butée arrière (31) avec un châssis de base (33) et au moins un élément de butée (32) pour le positionnement de la tôle à traiter sur le côté des barres de pression (13, 16) opposé au côté de la commande,
- une unité de manipulation d'outil (34) pour le déplacement de l'outil de pliage (4) entre l'au moins un magasin d'outils (30) et les logements d'outils (19, 20) ou pour le changement de positionnement de l'outil de pliage (4) par rapport aux logements d'outils (19, 20), l'unité de manipulation d'outil (34) étant disposée sur l'unité de butée arrière (31),
**caractérisé en ce que** l'unité de manipulation d'outil (34)
- comprend un bras de manipulation (35) avec une première partie d'extrémité (36) et une deuxième partie d'extrémité (37), ce bras de manipulation (35) étant logé, dans sa première partie d'extrémité (36), au niveau du châssis de base (33) de l'unité de butée arrière (31), autour d'un premier axe de pivotement (38), présentant une orientation verticale, de manière autonome et indépendante de l'au moins un élément de butée (32),
- comprend une unité de réglage (40), cette unité de réglage (40) étant en liaison d'entraînement avec le bras de manipulation (35) pour la réalisation du mouvement de pivotement,
- comprend un dispositif de manipulation d'outil (39) et le dispositif de manipulation d'outil (39) est disposé dans la deuxième partie d'extrémité (37) du bras de manipulation (35).

2. Installation de fabrication (1) selon la revendication 1, **caractérisée en ce que** le bras de manipulation (35) peut être déplacé par rapport au châssis de base (33) en direction du premier axe de pivotement (38).

3. Installation de fabrication (1) selon la revendication 1 ou 2, **caractérisée en ce que** le dispositif de manipulation d'outil (39) est logé de manière pivotante au niveau du bras de manipulation (35) autour d'un deuxième axe de pivotement (41) par rapport au bras de manipulation (35) et le deuxième axe de pivotement (41) présente une orientation parallèle au premier axe de pivotement (38).

4. Installation de fabrication (1) selon l'une des revendications précédentes, **caractérisée en ce que** l'unité de réglage (40) comprend un premier dispositif d'entraînement (42) avec un premier organe d'entraînement (43), ce premier organe d'entraînement (43) étant en liaison d'entraînement avec le bras de manipulation (35) et un premier axe d'entraînement (45) du premier dispositif d'entraînement (42) pour le bras de manipulation (35) étant orienté de manière coaxiale par rapport au premier axe de pivotement (38) du bras de manipulation (35).

5. Installation de fabrication (1) selon la revendication 4, **caractérisée en ce que** le premier dispositif d'entraînement (42) de l'unité de réglage (40) comprend un élément de palier et d'entraînement (44) conçu plus particulièrement sous forme tubulaire, cet élément de palier et d'entraînement (44) étant en liaison d'entraînement avec le bras de manipulation (35) et étant logé de manière rotative au niveau du châssis de base (33) de l'unité de butée arrière (31) et définissant le premier axe de pivotement (38).

6. Installation de fabrication (1) selon l'une des revendications précédentes, **caractérisée en ce que** l'unité de réglage (40) comprend un deuxième dispositif d'entraînement (46) qui est en liaison d'entraînement avec le dispositif de manipulation d'outil (39).

7. Installation de fabrication (1) selon la revendication 6, **caractérisée en ce que** le deuxième dispositif d'entraînement (46) comprend un arbre d'entraînement (47) et un arbre de sortie (48) en liaison d'entraînement avec celui-ci et **en ce que** l'arbre de sortie (48) est disposé dans la deuxième partie d'extrémité (37) du bras de manipulation (35) de manière coaxiale par rapport au deuxième axe de pivotement (41).

8. Installation de fabrication (1) selon la revendication 7, **caractérisée en ce que** l'arbre d'entraînement (47) est disposé dans la première partie d'extrémité (36) du bras de manipulation (35) et est orienté de manière coaxiale par rapport au premier axe de pivotement (38) du bras de manipulation (35).

9. Installation de fabrication (1) selon la revendication 7 ou 8, **caractérisée en ce que** l'arbre d'entraînement (47) est en liaison d'entraînement avec l'arbre de sortie (48) par l'intermédiaire d'un moyen d'entraînement (49) de préférence sans fin.

10. Installation de fabrication (1) selon l'une des revendications 7 à 9, **caractérisée en ce que** l'arbre d'entraînement (47) est disposé au moins partiellement à l'intérieur de l'élément de palier et d'entraînement (44) et est logé de manière rotative dans l'élément de palier et d'entraînement (44).

11. Installation de fabrication (1) selon l'une des revendications 6 à 10, **caractérisée en ce que** le deuxième dispositif d'entraînement (46) de l'unité de réglage (40) comprend un deuxième organe d'entraînement (50) et le deuxième organe d'entraînement (50) est en liaison d'entraînement avec l'arbre d'entraînement (47).

12. Installation de fabrication (1) selon l'une des revendications 6 à 10, **caractérisée en ce que**, sur l'arbre d'entraînement (47) de l'unité de réglage (40), est disposé un dispositif de couplage (52) et l'arbre d'entraînement (47) peut être couplée, au moyen du dispositif de couplage (52), soit avec le bras de manipulation (35), plus particulièrement avec l'élément de palier et d'entraînement (44) en liaison d'entraînement avec celui-ci, et le premier dispositif d'entraînement (42) en liaison d'entraînement avec le bras de manipulation (35), soit avec le châssis de base (33) de l'unité de butée arrière (31).

13. Installation de fabrication (1) selon l'une des revendications précédentes, **caractérisée en ce que** l'arbre d'entraînement (47) est divisé dans son extension axiale et une première partie d'arbre d'entraînement (54) est disposée dans le bras de manipulation (35) et une deuxième partie d'arbre d'entraînement (55) est disposée au niveau de l'unité de butée arrière (31) et le bras de manipulation (35) étant couplé de manière fixe en rotation, au moyen d'un dispositif de couplage (53), avec le premier dispositif d'entraînement (42), plus particulièrement son élément de palier et d'entraînement (44) et, dans la position de couplage, la première partie d'arbre d'entraînement (54) est en liaison d'entraînement avec la deuxième partie d'arbre d'entraînement (55).

14. Installation de fabrication (1) selon la revendication 6, **caractérisée en ce que** le deuxième dispositif d'entraînement (46) comprend un deuxième organe d'entraînement (50), ce deuxième organe d'entraînement (50) étant disposé sur le bras de manipulation (35) ou à l'intérieur du bras de manipulation (35) et étant en liaison d'entraînement avec le deuxième axe de pivotement (41) du dispositif de manipulation d'outil (39).

15. Installation de fabrication (1) selon l'une des revendications précédentes, **caractérisée en ce que** le dispositif de manipulation d'outil (39) comprend un premier dispositif de préhension (51), ce premier dispositif de préhension (51) étant disposé sur le deuxième axe de pivotement (41) ou sur l'arbre de sortie (48).

16. Installation de fabrication (1) selon la revendication 15, **caractérisée en ce que** le premier dispositif de préhension (51) est disposé au-dessus du bras de manipulation (35).

17. Installation de fabrication (1) selon la revendication 15 ou 16, **caractérisé en ce que** le dispositif de manipulation d'outil (39) comprend un deuxième dispositif de préhension (56), ce deuxième dispositif de préhension (56) étant également disposé sur le deuxième axe de pivotement (41) ou sur l'arbre de sortie (48), mais présentant une orientation opposée par rapport au premier dispositif de préhension (51).

18. Installation de fabrication (1) selon la revendication 17, **caractérisée en ce que** le deuxième dispositif de préhension (56) est disposé en dessous du bras de manipulation (35).

19. Installation de fabrication (1) selon la revendication 1 ou 2, **caractérisée en ce que** le dispositif de manipulation d'outil (39) est relié de manière fixe avec le bras de manipulation (35) et comprend au moins deux doigts de manipulation (57, 58) formant un angle droit, et **en ce que** les doigts de manipulation (57, 58) présentent une orientation longitudinale perpendiculaire par rapport au premier axe de pivotement (38).

20. Installation de fabrication (1) selon la revendication 19, **caractérisée en ce qu'**un des doigts de manipulation (57, 58) est orienté à angle droit par rapport à l'extension longitudinale du bras de manipulation (35) et l'autre doigt de manipulation (58, 57) dépasse du bras de manipulation (35) en direction de l'extension longitudinale du bras de manipulation (35).
